# EUROPEAN PATENT APPLICATION

(11) **EP 2 381 725 A2**
(43) Date of publication of application: **26.10.2011**
(21) Application number: 11156722.8
(22) Date of filing: 03.03.2011
(51) Int. Cl.: H04W 52/26, H04L 1/00

(54) **Base station apparatus and communication method**

(30) Priority: 18.03.2010 JP 2010062839
(71) Applicant: Fujitsu Limited, Kawasaki-shi, Kanagawa 211-8588 (JP)
(72) Inventor: HIRATA, Shuya, Kawasaki-shi Kanagawa 211-8588 (JP)
(74) Representative: Lewin, David Nicholas

(57) **Abstract**

A base station apparatus performing a shared channel communication with a plurality of terminals includes a signal processor configured to employ, when the base station apparatus changes a value of a parameter from an old value to a new value, a communication or modulation scheme in a communication with one terminal of the plurality of terminals. The parameter is for determining transmission power for the communication with the one terminal. The communication or modulation scheme allows the communication with the one terminal to be kept while at least a time period from a time when the base station apparatus transmits the new value until a time when the one terminal receives and recognizes the new value.

## Description

### FIELD

The embodiments discussed herein are related to a base station apparatus and a communication method for radio communication.

### BACKGROUND

In a radio communication scheme, such as a long term evolution (LTE) system, in which a plurality of terminals share a physical channel to a base station apparatus, the downlink transmission from the base station apparatus to a terminal uses a physical downlink shared channel (PDSCH) communication scheme by which a plurality of terminals share a channel.

The base station apparatus may control transmission power for each terminal individually with a power offset value P_{A} which is a power parameter. The power offset value P_{A} refers to an offset value [dB] which may be specified in power control for each terminal in determining a power ratio between a power of a reference signal and a power of the PDSCH channel. The power offset value P_{A} is also assumed to be used in fractional frequency reuse (FFR) or inter-cell interference coordination (ICIC). Related technologies are disclosed in "5.2 Downlink power allocation", 3GPP TS 36.213 V8.8.0 (2009-09) and Japanese Laid-open Patent Publication No. 2009-219098.

### SUMMARY

It is preferable to provide a base station apparatus and communication method which may keep communication with a terminal even when the power offset value is changed during communication.

According to the embodiments of the present invention, provided is a base station apparatus performing a shared channel communication with a plurality of terminals. The base station apparatus includes a signal processor configured to employ, when the base station apparatus changes a value of a parameter from an old value to a new value, a communication or modulation scheme in a communication with one terminal of the plurality of terminals. The parameter is for determining transmission power for the communication with the one terminal. The communication or modulation scheme allows the communication with the one terminal to be kept while at least a time period from a time when the base station apparatus transmits the new value until a time when the one terminal receives and recognizes the new value.

### BRIEF DESCRIPTION OF DRAWINGS

FIG. 1 is a diagram illustrating an exemplary configuration of a base station apparatus according to an embodiment of the present invention;

FIG. 2 is a diagram illustrating an exemplary configuration of a terminal according to an embodiment of the present invention;

FIG. 3 is a diagram illustrating an exemplary operation sequence performed by a base station apparatus and a terminal according to an embodiment of the present invention;

FIG. 4 is a diagram illustrating an exemplary operation flow of a baseband signal processor according to an embodiment of the present invention;

FIG. 5 is a diagram illustrating an exemplary operation flow of determining a transmission parameter in scheduling according to an embodiment of the present invention;

FIG. 6 is a diagram illustrating an exemplary operation sequence performed by a base station apparatus and a terminal according to an embodiment of the present invention;

FIG. 7A is a diagram illustrating an exemplary operation flow of a baseband signal processor according to an embodiment of the present invention;

FIG. 7B is a diagram illustrating an exemplary operation flow of a baseband signal processor according to an embodiment of the present invention;

FIG. 8 is a diagram illustrating an exemplary operation sequence performed by a base station apparatus and a terminal according to an embodiment of the present invention;

FIG. 9 is a diagram illustrating an exemplary operation flow of a baseband signal processor according to an embodiment of the present invention;

FIG. 10 is a diagram illustrating an exemplary operation sequence performed by a base station apparatus and a terminal according to an embodiment of the present invention;

FIG. 11 is a diagram illustrating an exemplary operation flow of a baseband signal processor according to an embodiment of the present invention;

FIG. 12 is a diagram illustrating an exemplary operation sequence performed by a base station apparatus and a terminal according to an embodiment of the present invention;

FIG. 13 is a diagram illustrating an exemplary format of an RRC message notification according to an embodiment of the present invention;

FIG. 14 is a diagram illustrating an exemplary operation flow of a baseband signal processor according to an embodiment of the present invention;

FIG. 15 is a diagram illustrating an exemplary operation sequence performed by a base station apparatus and a terminal according to an embodiment of the present invention;

FIG. 16 is a diagram illustrating an exemplary operation flow of a baseband signal processor according to an embodiment of the present invention;

FIG. 17 is a diagram illustrating an exemplary operation flow of a baseband signal processor according to an embodiment of the present invention;

FIG. 18 is a table illustrating an example of determination of scheduling targets in a baseband signal processor according to an embodiment of the present invention;

FIG. 19 is a diagram illustrating an exemplary operation flow of a baseband signal processor according to an embodiment of the present invention;

FIG. 20 is a table illustrating an example of determination of scheduling targets in a baseband signal processor according to an embodiment of the present invention;

FIG. 21 is a diagram illustrating an exemplary operation flow of a baseband signal processor according to an embodiment of the present invention;

FIG. 22 is a table illustrating an example of determination of scheduling targets in a baseband signal processor according to an embodiment of the present invention;

FIG. 23 is a diagram illustrating an exemplary operation flow of a baseband signal processor according to an embodiment of the present invention;

FIG. 24 is a diagram illustrating an exemplary operation flow of a baseband signal processor according to an embodiment of the present invention;

FIG. 25 is a diagram illustrating an exemplary operation flow of a baseband signal processor according to an embodiment of the present invention;

FIG. 26 is a table illustrating an example of assigning scheduling priority levels according to an embodiment of the present invention;

FIG. 27 is a diagram illustrating an exemplary operation flow of user selection based on scheduling priority level according to an embodiment of the present invention;

FIG. 28 is a diagram illustrating an exemplary operation flow of a baseband signal processor according to an embodiment of the present invention;

FIG. 29 is a table illustrating an example of assigning scheduling priority levels according to an embodiment of the present invention;

FIG. 30 is a diagram illustrating an exemplary operation flow of a baseband signal processor according to an embodiment of the present invention;

FIG. 31 is a table illustrating an example of assigning scheduling priority levels according to an embodiment of the present invention;

FIG. 32 is a diagram illustrating an exemplary operation flow of a baseband signal processor according to an embodiment of the present invention;

FIG. 33 is a table illustrating an example of assigning weighting factors for scheduling according to an embodiment of the present invention;

FIG. 34 is a diagram illustrating an exemplary operation flow of user selection based on weighting factors according to an embodiment of the present invention;

FIG. 35 is a diagram illustrating an exemplary operation flow of a baseband signal processor according to an embodiment of the present invention;

FIG. 36 is a table illustrating an example of assigning weighting factors for scheduling according to an embodiment of the present invention;

FIG. 37 is a diagram illustrating an exemplary operation flow of a baseband signal processor according to an embodiment of the present invention; and

FIG. 38 is a table illustrating an example of assigning weighting factors for scheduling according to an embodiment of the present invention.

### DESCRIPTION OF EMBODIMENTS

When the power offset value P_{A} is simply adopted in FFR or ICIC, the value of the power offset value P_{A} may be changed during communication (or call connection). When the power offset value P_{A} is changed, it is notified to the corresponding terminal with a radio resource control (RRC) message. However, in an LTE system mentioned above, the notification does not include a parameter defined for specifying the timing.

This may yield a certain time period in which the power offset value P_{A} recognized by the base station apparatus and the terminal may differ from each other. When the power offset value P_{A} recognized by the base station apparatus and the terminal differs, the power ratio to the reference signal may not be clear. This may disable decoding in a modulation scheme such as 16 quadrature amplitude modulation (16-QAM), 64-QAM, and spatial multiplexing for a plurality of layers or a communication scheme such as a multi-user multiple input multiple output (MU-MIMO), and block the communication.

The base station apparatus according to the embodiments may keep a communication with a terminal even when the power offset value is changed during communication.

With reference to the attached drawings, embodiments of the base station apparatus and communication method will be discussed in detail.

[First Embodiment]

[Configuration of Base Station Apparatus]

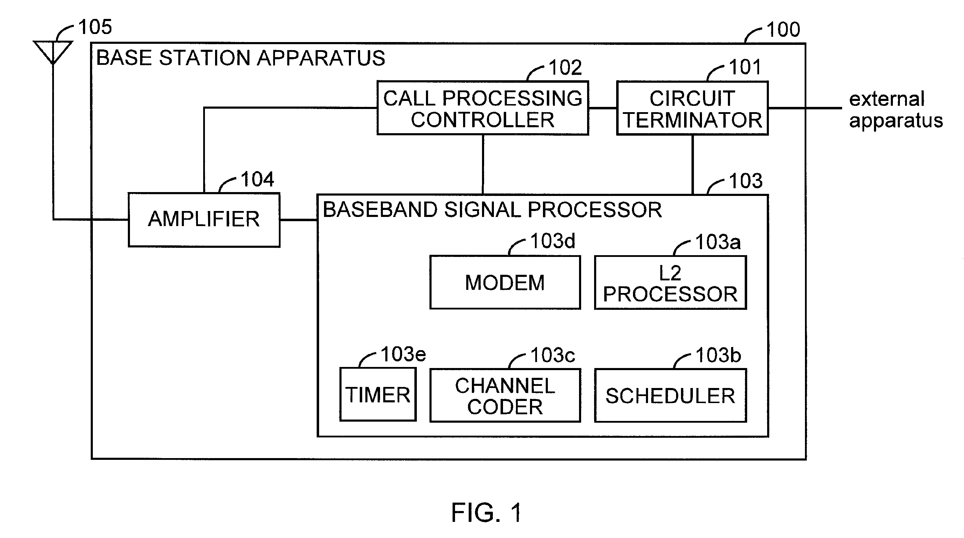

FIG. 1 illustrates an exemplary configuration of a base station apparatus according to the present embodiment. A base station apparatus (local station) 100 includes a circuit terminator 101 connected to an external apparatus, a call processing controller 102, a baseband signal processor 103, an amplifier 104 for transmitting and receiving signals, and an antenna 105.

The call processing controller 102 determines to change the power offset value P_{A} corresponding to the power ratio mentioned above and performs termination of a message (RRC message) for communicating with a terminal. The baseband signal processor 103 includes an L2 processor 103a, a scheduler 103b, a channel coder 103c, a modulator/demodulator (modem) 103d, and a timer 103e, and generates a baseband signal for communicating with a terminal. The scheduler 103b may determine, instead of the call processing controller 102, to change the power offset value P_{A}.

The scheduler 103b performs scheduling of respective terminals of a plurality of users. The scheduler 103b selects a terminal to be assigned to the channel for each frame when a plurality of terminals share the channel as in LTE. The scheduler 103b determines a transmission parameter for transmitting data and notifies the channel coder 103c and the modem 103d of the determined transmission parameter. The transmission parameter indicates a modulation scheme such as 16-QAM, 64-QAM, or spatial multiplexing for a plurality of layers, or a communication scheme such as MU-MIMO. All of the modulation or communication schemes indicated by the transmission parameters mentioned above are modulation or communication schemes allowing efficient data transmission. However, those transmission parameters indicate communication or modulation schemes which may cause an error in decoding when the power offset value P_{A} is recognized differently by the base station apparatus and the terminal (i.e., when the power ratio to the reference signal is not clear).

According to the embodiments, there is further prepared a communication or modulation scheme, such as quadrature phase shift keying (QPSK) modulation scheme with a single codeword other than MIMO, which allows decoding in a terminal and keeping communication even when the power offset value P_{A} is differently recognized by the base station apparatus and the terminal, as a transmission parameter. Communication with the QPSK modulation does not cause an error in decoding even when the problematic difference occurs between the recognized power ratios. As well as the QPSK modulation, any schemes may be indicated by the transmission parameter as long as the schemes do not cause error in decoding even when the recognized power ratios are different.

According to the first embodiment, the scheduler 103b measures a predetermined time period T by using the timer 103e. The predetermined time period T is set, with a margin, in consideration of a time period from the time when the power offset value P_{A} is updated to a new power offset value P_{A}__{NEW} in the base station apparatus 100 to the time when the power offset value P_{A} is changed to the new power offset value PA_NEw in the terminal after the terminal receives the new power offset value P_{A}__{NEW} (corresponding to a time period until the terminal recognizes the new power offset value P_{A}__{NEW} and the same power offset value P_{A} is recognized by the terminal and the base station apparatus 100).

The channel coder 103c and the modem 103d may change the communication or modulation scheme in accordance with the transmission parameter determined by the scheduler 103b to the above-mentioned modulation scheme (such as QPSK, 16-QAM, 64-QAM, and spatial multiplexing for a plurality of layers) or the communication scheme such as MU-MIMO. The amplifier 104 amplifies the baseband signal generated by the baseband signal processor 103 and transmits the radio signal to the terminal via the antenna 105.

[Configuration of Terminal]

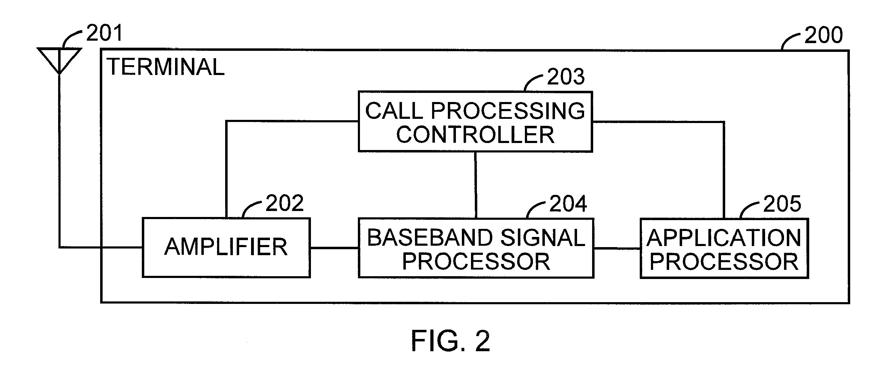

FIG. 2 illustrates an exemplary configuration of a terminal according to the present embodiment. The terminal 200 includes an antenna 201, an amplifier 202 for transmitting and receiving signals, a call processing controller 203, the baseband signal processor 204, and an application processor 205. The amplifier 202 receives a radio signal from the base station apparatus 100 via the antenna 201. The baseband signal processor 204 demodulates the received signal in compliance with a demodulation or communication scheme corresponding to the transmission parameter (the modulation or communication scheme mentioned above) set in the base station apparatus 100. Specifically, the baseband signal processor 204 demodulates the received baseband signal in accordance with the notified power offset value P_{A}. The call processing controller 203 performs termination of an RRC message to be communicated with the base station apparatus 100. The application processor 205 receives the demodulated received signal and performs operations of functions that the terminal 200 has.

[Operation Sequence of Base Station Apparatus and Terminal]

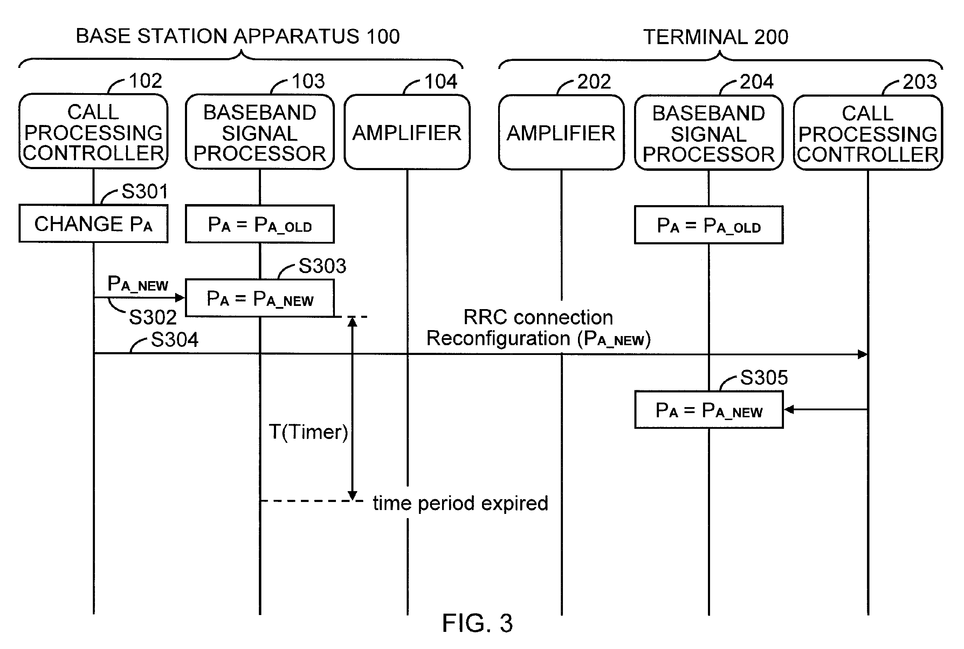

FIG. 3 illustrates an exemplary operation sequence performed by a base station apparatus and a terminal according to the present embodiment. When the call processing controller 102 of the base station apparatus 100 determines to change the power offset value P_{A} in accordance with a change (such as a power change for preventing the power interference with other cells) in communication status to/from the terminal 200 (operation S301), the call processing controller 102 notifies the baseband signal processor 103 of a new power offset value P_{A_NEW} (operation S302). The baseband signal processor 103 updates the power offset value P_{A} from the current power offset value (old power offset value) P_{A_OLD} to the new power offset value P_{A_NEW} (operation S303).

The call processing controller 102 generates an RRC message (an RRC connection reconfiguration) for establishing RRC connection. The RRC connection reconfiguration includes data of the new power offset value P_{A_NEW}. The call processing controller 102 notifies the terminal 200 of the RRC connection reconfiguration via the baseband signal processor 103 and the amplifier 104 (operation S304). Either operation S302 or operation S304 may be performed first.

In the terminal 200, the call processing controller 203 notifies the baseband signal processor 204 of the received new power offset value P_{A_NEW}. The baseband signal processor 204 receives the notification and updates the power offset value P_{A} from the old power offset value P_{A_OLD} to the new power offset value P_{A_NEW} (operation S305).

[Operations performed by Baseband signal processor of Base Station Apparatus]

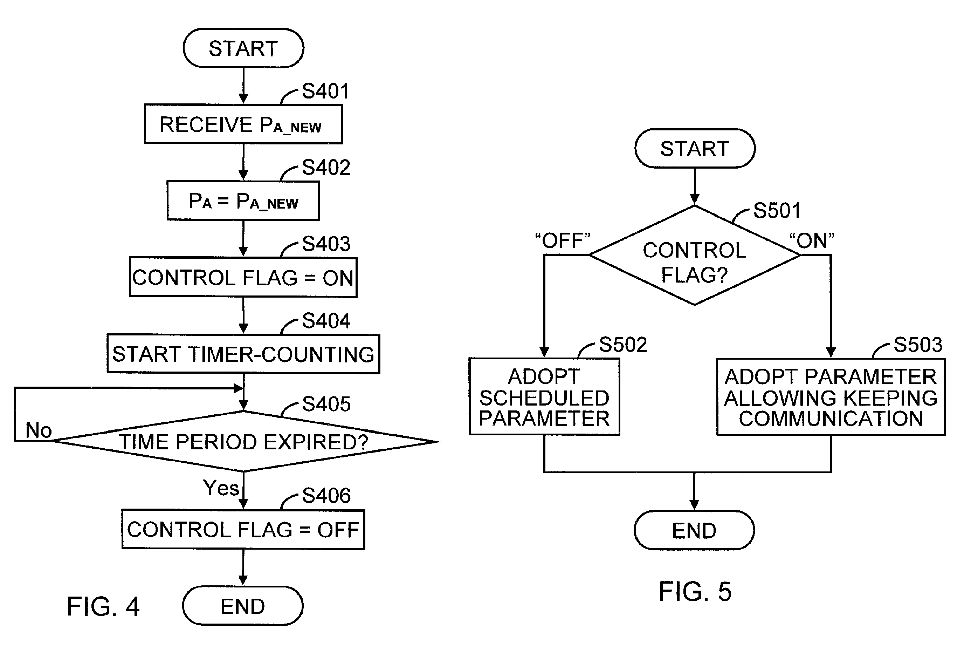

FIG. 4 illustrates an exemplary operation flow of a baseband signal processor according to the present embodiment. Specifically, FIG. 4 illustrates operations performed by the scheduler 103b of the baseband signal processor 103. Upon receiving the new power offset value P_{A_NEW} (operation S401), the scheduler 103b updates the power offset value P_{A} to the new power offset value P_{A_NEW} (operation S402).

The scheduler 103b has a flag (referred to as a control flag) for controlling transmission. The control flag is a parameter for managing a status of the destination terminal 200. The scheduler 103b turns on the control flag (operation S403) when updating the power offset value P_{A} in operation S402. The scheduler 103b starts timer-counting for the predetermined time period T by using the timer 103e (operation S404, refer to FIG. 3) and waits for the expiration of the predetermined time period T ("No" in operation S405). When the predetermined time period T expires ("Yes" in operation S405), the scheduler 103b turns off the control flag (operation S406).

FIG. 5 illustrates an exemplary operation flow of determining a transmission parameter in scheduling according to the present embodiment. When a plurality of terminals share a channel as in LTE, the scheduler 103b determines, for each frame, a terminal assigned to the channel and a transmission parameter to be based on in the transmission.

The scheduler 103b determines, when scheduling, whether the control flag (refer to FIG. 4) for the destination terminal 200 indicates the "ON" state or the "OFF" state (operation S501). During the time period when the control flag is indicating the "OFF" state, the scheduler 103b normally adopts the transmission parameter (such as QPSK, 16-QAM, 64-QAM and spatial multiplexing for a plurality of layers or MU-MIMO) determined through the scheduling and the base station apparatus 100 performs transmission in accordance with the adopted transmission parameter (operation S502). On the other hand, during the time period (predetermined time period T) when the control flag is indicating the "ON" state, the scheduler 103b temporarily changes the transmission parameter to a transmission parameter (such as QPSK modulation) with which the terminal 200 may keep communication even when the power offset value P_{A} recognized by the base station apparatus 100 and the terminal 200 differs (operation S503).

According to the present embodiment, even during the time period when the power offset value P_{A} recognized by the base station apparatus 100 and the terminal 200 differs, a communication scheme (such as QPSK) which allows keeping communication is employed so that the base station apparatus 100 may keep communication to the terminal 200. After the expiration of the predetermined time period T measured by the timer 103e, the base station apparatus 100 may perform transmission and reception according to the transmission parameter (such as 16-QAM modulation scheme which is more efficient than QPSK) determined through the scheduling in operation S502 normally.

[Second Embodiment]

A second embodiment is different from the first embodiment in that the baseband signal processor 103 of the base station apparatus 100 updates the power offset value P_{A} to the new power offset value P_{A_NEW} after expiration of the predetermined time period T measured by the timer 103e.

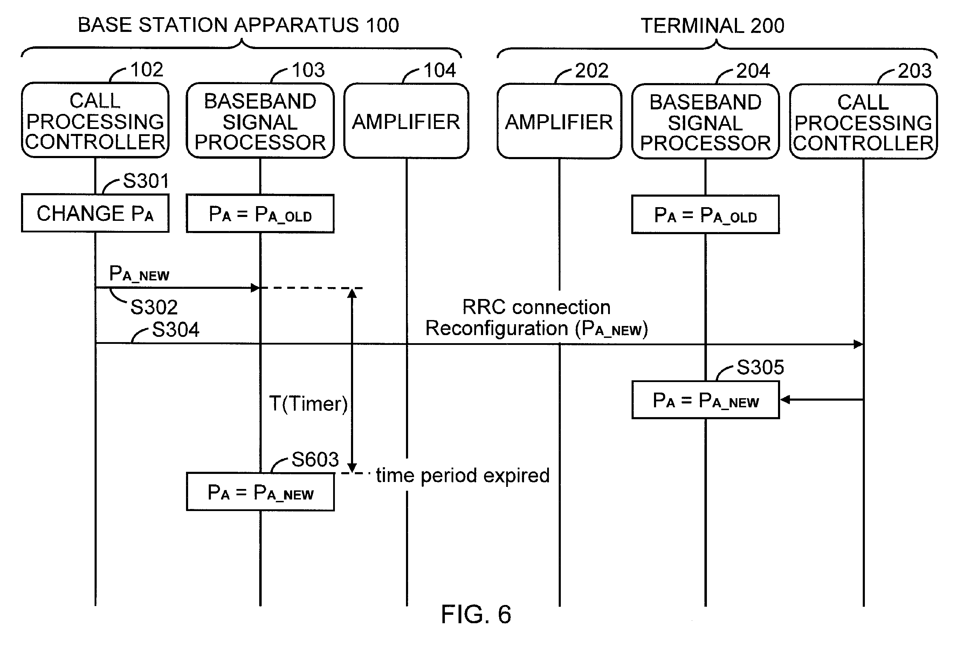

FIG. 6 illustrates an exemplary operation sequence performed by a base station apparatus and a terminal according to the present embodiment. When the call processing controller 102 of the base station apparatus 100 determines to change the power offset value P_{A} (operation S301), the call processing controller 102 notifies the baseband signal processor 103 of a new power offset value P_{A_NEW} (operation S302). At the same time, the call processing controller 102 generates an RRC connection reconfiguration including the new power offset value P_{A_NEW} and notifies the terminal 200 of the RRC connection reconfiguration via the baseband signal processor 103 and amplifier 104 (operation S304).

In the terminal 200, the call processing controller 203 receives the new power offset value P_{A_NEW} and notifies the baseband signal processor 204 of the received new power offset value P_{A_NEW}. The baseband signal processor 204 of the terminal 200 receives the notification and immediately updates the power offset value P_{A} from the old power offset value P_{A_OLD} to the new power offset value P_{A_NEW} (operation S305).

According to the present embodiment, the baseband signal processor 103 of the base station apparatus 100 does not update the power offset value P_{A} immediately when the new power offset value P_{A_NEW} is notified. After that, the baseband signal processor 103 starts timer-counting of the predetermined time period T by using the timer 103e and updates the power offset value P_{A} to the new power offset value P_{A_NEW} after the time period expires (operation S603). The operation of determining the transmission parameter for each frame is similar to that of the first embodiment (refer to FIG. 5).

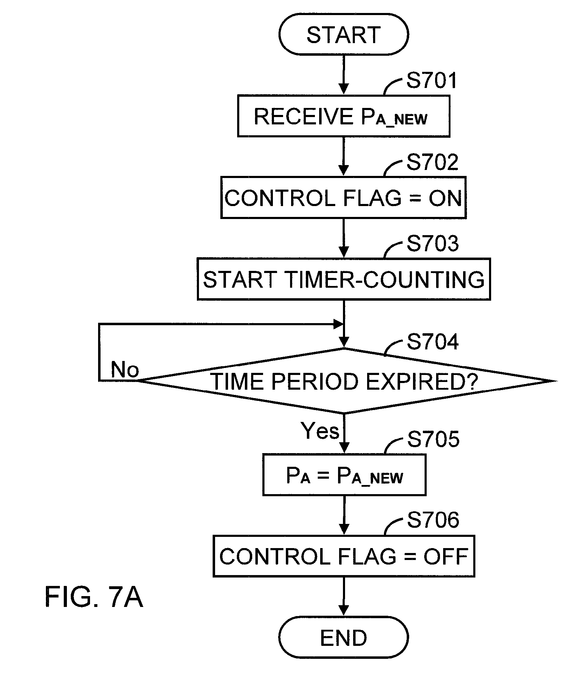

FIG. 7A illustrates an exemplary operation flow of a baseband signal processor according to the present embodiment. Upon receiving the new power offset value P_{A_NEW} (operation S701), the scheduler 103b of the baseband signal processor 103 turns on the control flag (operation S702). The scheduler 103b starts timer-counting for the predetermined time period T with the timer 103e (operation S703, refer to FIG. 6) and waits for the expiration of the predetermined time period T ("No" in operation S704). When the predetermined time period T expires ("Yes" in operation S704), the scheduler 103b updates the power offset value P_{A} to the new power offset value P_{A_NEW} (operation S705) and turns off the control flag (operation S706).

According to the present embodiment, even during the time period when the power offset value P_{A} recognized by the base station apparatus 100 and the terminal 200 differs, a communication scheme (such as QPSK) which allows keeping communication is employed so that the base station apparatus 100 may keep communication to the terminal 200.

According to the present embodiment, since the power offset value P_{A} is changed after the expiration of the predetermined time period T measured by the timer 103e, the transmission power during the predetermined time period T may be reduced more than the first embodiment when the new power offset value P_{A_NEW} is higher than the old power offset value P_{A_OLD}.

[Variation Example of Second Embodiment]

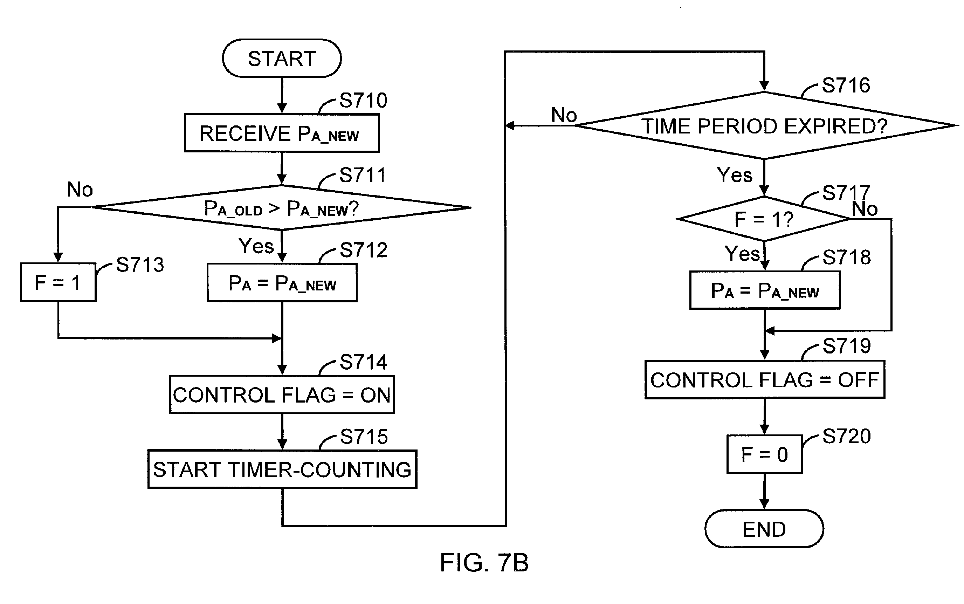

A variation example of the second embodiment will be discussed below. FIG. 7B illustrates another exemplary operation flow of a baseband signal processor according to the present embodiment. In this operation flow, the scheduler 103b of the baseband signal processor 103 further compares the new power offset value P_{A_NEW} with the old power offset value P_{A_OLD} and changes the timing of updating the power offset value P_{A} for the terminal 200 to the new power offset value P_{A_NEW} in accordance with the difference between the compared values.

Upon receiving the new power offset value P_{A_NEW} (operation S710), the scheduler 103b compares the new power offset value P_{A_NEW} with the old power offset value P_{A_OLD} (operation S711). When the new power offset value P_{A_NEW} is lower than the old power offset value P_{A_OLD} (P_{A_OLD} > P_{A_NEW}) ("Yes" in operation S711), the scheduler 103b immediately updates the power offset value P_{A} to the new power offset value P_{A_NEW} (operation S712) and advances the process to operation S714. On the other hand, when the new power offset value P_{A_NEW} is higher than or equal to the old power offset value P_{A_OLD} (P_{A_OLD} ≤ P_{A_NEW}) ("No" in operation S711), the scheduler 103b does not update the power offset value P_{A} at this stage but turns on a flag F indicative of whether the power offset value P_{A} is to be updated (operation S713) and advances the process to operation S714. The initial value of the flag F is "0".

After that, the scheduler 103b turns on the control flag (operation S714). The scheduler 103b starts timer-counting for the predetermined time period T by using the timer 103e (operation S715, refer to FIG. 6) and waits for expiration of the predetermined time period T ("No" in operation S716). When the predetermined time period T expires ("Yes" in operation S716), the scheduler 103b checks the flag F, and if the value of the flag F is "0" ("No" in operation S717), which means that the power offset value P_{A} has been updated, advances the process to operation S719. If the value of the flag F is "1" ("Yes" in operation S717), the scheduler 103b updates the power offset value P_{A} to the new power offset value P_{A_NEW} (operation S718). After that, the scheduler 103b turns off the control flag (operation S719) and clears the flag F (operation S720).

In this way, the call processing controller 102 determines whether the new power offset value P_{A_NEW} is higher or lower than the old power offset value P_{A_OLD} by comparing them. If the new power offset value P_{A_NEW} is lower than the old power offset value P_{A_OLD}, operations of the first embodiment are performed (i.e., the scheduler 103b immediately updates the power offset value P_{A} to the new power offset value P_{A_NEW}). If the new power offset value P_{A_NEW} is not lower than the old power offset value P_{A_OLD}, operations of the second embodiment are performed (i.e., the scheduler 103b updates the power offset value P_{A} to the new power offset value P_{A_NEW} after the expiration of a predetermined time period T). Thus, in either case where the new power offset value P_{A_NEW} is higher or lower than the old power offset value P_{A_OLD}, the transmission power during the predetermined time period T may be reduced, and the power consumption by the apparatus may be reduced.

[Third Embodiment]

According to a third embodiment, the baseband signal processor 103 of the base station apparatus 100 discussed in the first embodiment does not perform the timer-counting but turns off the control flag in accordance with a response from the terminal 200.

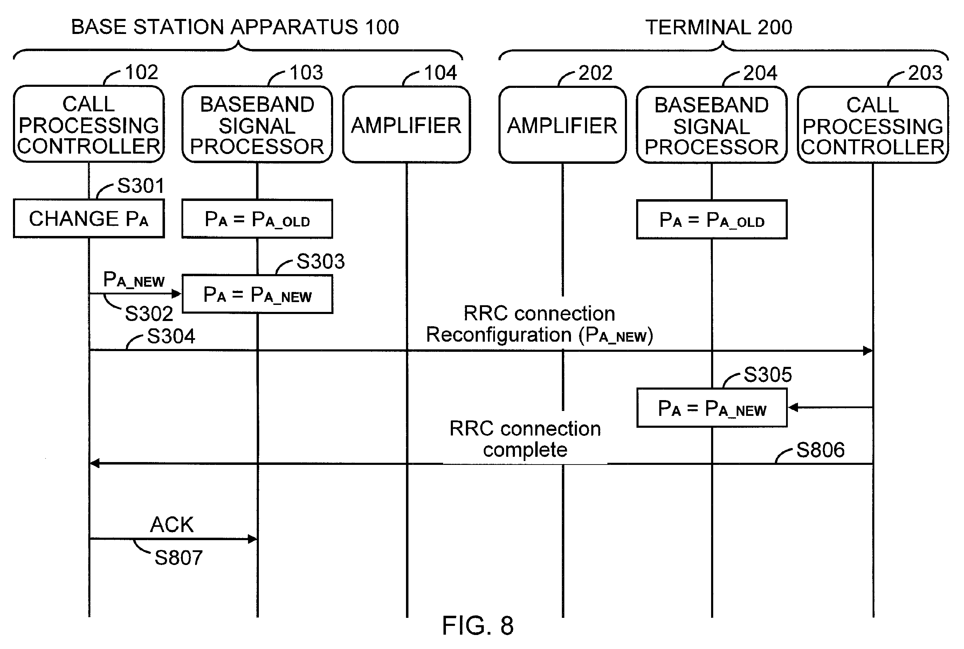

FIG. 8 illustrates an exemplary operation sequence performed by a base station apparatus and a terminal according to the present embodiment. When the call processing controller 102 of the base station apparatus 100 determines to change the power offset value P_{A} in accordance with the a change in communication status to/from the terminal 200 (operation S301), the call processing controller 102 notifies the baseband signal processor 103 of a new power offset value P_{A_NEW} (operation S302). The baseband signal processor 103 updates the power offset value P_{A} from the current power offset value (old power offset value) P_{A_OLD} to the new power offset value P_{A_NEW} (operation S303).

The call processing controller 102 generates an RRC connection reconfiguration for establishing RRC connection. The RRC connection reconfiguration includes data of the new power offset value P_{A_NEW}. The call processing controller 102 notifies the terminal 200 of the RRC connection reconfiguration via the baseband signal processor 103 and amplifier 104 (operation S304).

In the terminal 200, the call processing controller 203 notifies the baseband signal processor 204 of the received new power offset value P_{A_NEW}. The baseband signal processor 204 receives the notification and updates the power offset value P_{A} from the old power offset value P_{A_OLD} to the new power offset value P_{A_NEW} (operation S305). After that, the call processing controller 203 of the terminal 200 transmits a response message (RRC connection complete) to the base station apparatus 100 in response to the RRC connection reconfiguration (operation S806).

In the base station apparatus 100, the call processing controller 102 outputs an acknowledgement (ACK) to the baseband signal processor 103 upon receiving the RRC connection complete (operation S807). The ACK is acquired in accordance with a positive response (RRC connection complete) transmitted from the terminal 200 in response to the RRC connection reconfiguration transmitted from the base station apparatus 100 to the terminal 200 in operation S304.

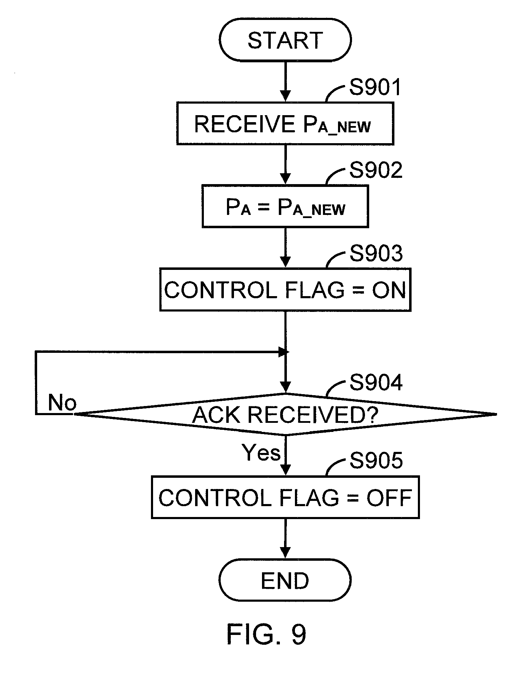

FIG. 9 illustrates an exemplary operation flow of a baseband signal processor according to the present embodiment. Upon receiving the new power offset value P_{A_NEW} (operation S901), the scheduler 103b of the baseband signal processor 103 immediately updates the power offset value P_{A} to the new power offset value P_{A_NEW} (operation S902).

The scheduler 103b turns on the control flag (operation S903) when updating the power offset value P_{A} in operation S902. After that, the scheduler 103b waits for the reception of the ACK from the call processing controller 102 ("No" in operation S904). Upon receiving the ACK ("Yes" in operation S904), the scheduler 103b turns off the control flag (operation S905). The operation of determining the transmission parameter for each frame is similar to that of the first embodiment (refer to FIG. 5).

According to the present embodiment, even during the time period when the power offset value P_{A} recognized by the base station apparatus 100 and the terminal 200 differs, a communication scheme (such as QPSK) which allows keeping communication is employed so that the base station apparatus 100 may keep communication to the terminal 200. The terminal 200 transmits the RRC connection complete to the base station apparatus 100 upon updating the power offset value P_{A} to the new power offset value P_{A_NEW}. The baseband signal processor 103 of the base station apparatus 100 turns off the control flag upon receiving the ACK. Thus, the base station apparatus 100 may normally perform, in accordance with the status of the terminal 200, transmission and reception according to the transmission parameter (such as 16-QAM modulation scheme which is more efficient than QPSK) determined through the scheduling, without using the timer 103e discussed in the first embodiment.

[Fourth Embodiment]

According to a fourth embodiment, the baseband signal processor 103 of the base station apparatus 100 discussed in the second embodiment does not perform the timer-counting but turns off the control flag in accordance with a response from the terminal 200.

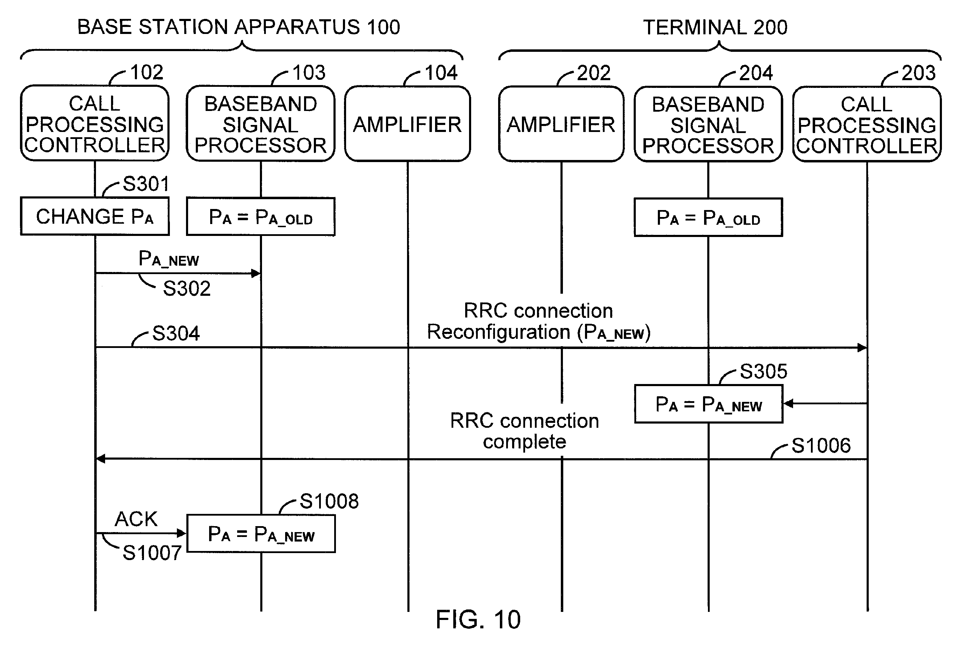

FIG. 10 illustrates an exemplary operation sequence performed by a base station apparatus and a terminal according to the present embodiment. When the call processing controller 102 of the base station apparatus 100 determines to change the power offset value P_{A} (operation S301), the call processing controller 102 notifies the baseband signal processor 103 of a new power offset value P_{A_NEW} (operation S302). At the same time, the call processing controller 102 generates an RRC connection reconfiguration including the new power offset value P_{A_NEW} and notifies the terminal 200 of the RRC connection reconfiguration via the baseband signal processor 103 and amplifier 104 (operation S304).

In the terminal 200, the call processing controller 203 receives the new power offset value P_{A_NEW} and notifies the baseband signal processor 204 of the received new power offset value P_{A_NEW}. The baseband signal processor 204 of the terminal 200 receives the notification and immediately updates the power offset value P_{A} from the old power offset value P_{A_OLD} to the new power offset value P_{A_NEW} (operation S305). After that, the call processing controller 203 of the terminal 200 transmits a response message (RRC connection complete) to the base station apparatus 100 in response to the RRC connection reconfiguration (operation S1006).

In the base station apparatus 100, the call processing controller 102 outputs an ACK to the baseband signal processor 103 upon receiving the RRC connection complete (operation S1007). The ACK is acquired in accordance with a positive response (RRC connection complete) transmitted from the terminal 200 in response to the RRC connection reconfiguration transmitted from the base station apparatus 100 to the terminal 200 in operation S304. Upon receiving the ACK, the baseband signal processor 103 updates the power offset value P_{A} to a new power offset value P_{A_NEW} (operation S1008). The operation of determining the transmission parameter for each frame is similar to that of the first embodiment (refer to FIG. 5).

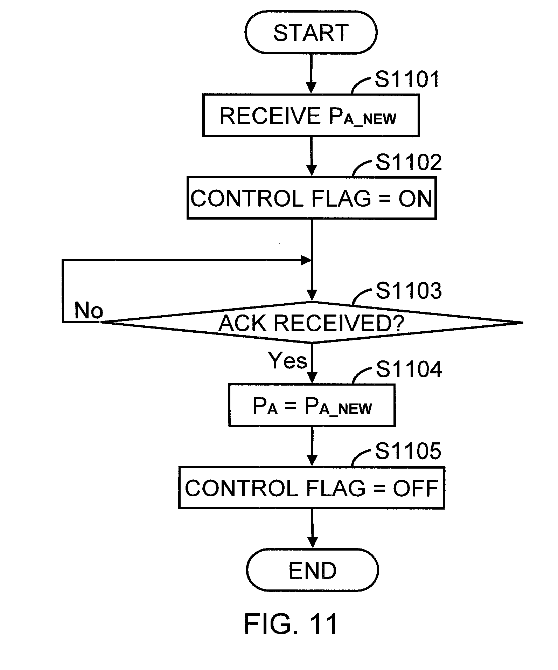

FIG. 11 illustrates an exemplary operation flow of a baseband signal processor according to the present embodiment. Upon receiving the new power offset value P_{A_NEW} (operation S1101), the scheduler 103b of the baseband signal processor 103 turns on the control flag (operation S1102). The scheduler 103b then waits for the reception of the ACK from the call processing controller 102 ("No" in operation S1103). Upon receiving the ACK ("Yes" in operation S1103), the scheduler 103b updates the power offset value P_{A} to the new power offset value P_{A_NEW} (operation S1104) and turns off the control flag (operation S1105).

According to the present embodiment, even during the time period when the power offset value P_{A} recognized by the base station apparatus 100 and the terminal 200 differs, a communication scheme (such as QPSK) which allows keeping communication is employed so that the base station apparatus 100 may keep communication to the terminal 200. The terminal 200 transmits the RRC connection complete to the base station apparatus 100 upon updating the power offset value P_{A} to the new power offset value P_{A_NEW}. The baseband signal processor 103 of the base station apparatus 100 updates the power offset value P_{A} upon receiving the ACK. Thus, the base station apparatus 100 may normally perform, in accordance with the status of the terminal 200, transmission and reception according to the transmission parameter (such as 16-QAM modulation scheme which is more efficient than QPSK) determined through the scheduling, without using the timer 103e discussed in the second embodiment.

According to the present embodiment, since the power offset value P_{A} is changed after the reception of the RRC connection complete, the transmission power until the reception of RRC connection complete may be reduced more than the third embodiment when the new power offset value P_{A_NEW} is higher than the old power offset value P_{A_OLD}.

Like the variation example (refer to FIG. 7B) of the second embodiment, the scheduler 103b of the baseband signal processor 103 may further compare the new power offset value P_{A_NEW} with the old power offset value P_{A_OLD} and change the timing of updating the power offset value P_{A} for the terminal 200 to the new power offset value P_{A_NEW} in accordance with the difference between the compared values. Thus, in either case where the new power offset value P_{A_NEW} is higher or lower than the old power offset value P_{A_OLD}, the transmission power during the time period from the determination to change the power offset value P_{A} to the reception of the RRC connection complete may be reduced as much as possible, and the power consumption by the apparatus may be reduced.

[Fifth Embodiment]

According to a fifth embodiment, the baseband signal processor 103 of the base station apparatus 100 discussed in the first embodiment does not perform the timer-counting but memorizes the fact that the RRC message with the new power offset value P_{A_NEW} has been transmitted to the terminal 200. The baseband signal processor 103 turns off the control flag in accordance with a response, received from the terminal 200, responding to the PDSCH signal including media access control (MAC) packet data unit (PDU) including the RRC message.

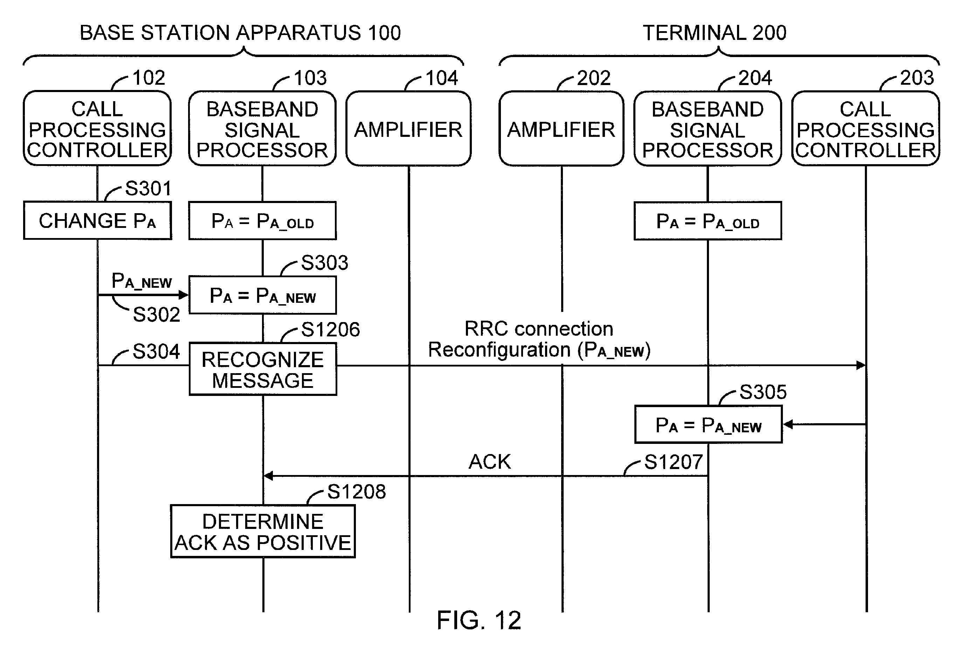

FIG. 12 illustrates an exemplary operation sequence performed by a base station apparatus and a terminal according to the present embodiment. When the call processing controller 102 of the base station apparatus 100 determines to change the power offset value P_{A} in accordance with a change in communication status to/from the terminal 200 (operation S301), the call processing controller 102 notifies the baseband signal processor 103 of a new power offset value P_{A_NEW} (operation S302). The baseband signal processor 103 updates the power offset value P_{A} from the current power offset value (old power offset value) P_{A_OLD} to the new power offset value P_{A_NEW} (operation S303).

The call processing controller 102 generates an RRC connection reconfiguration for changing RRC connection including the data of the new power offset value P_{A_NEW} and notifies the baseband signal processor 103 of the RRC connection reconfiguration (operation S304).

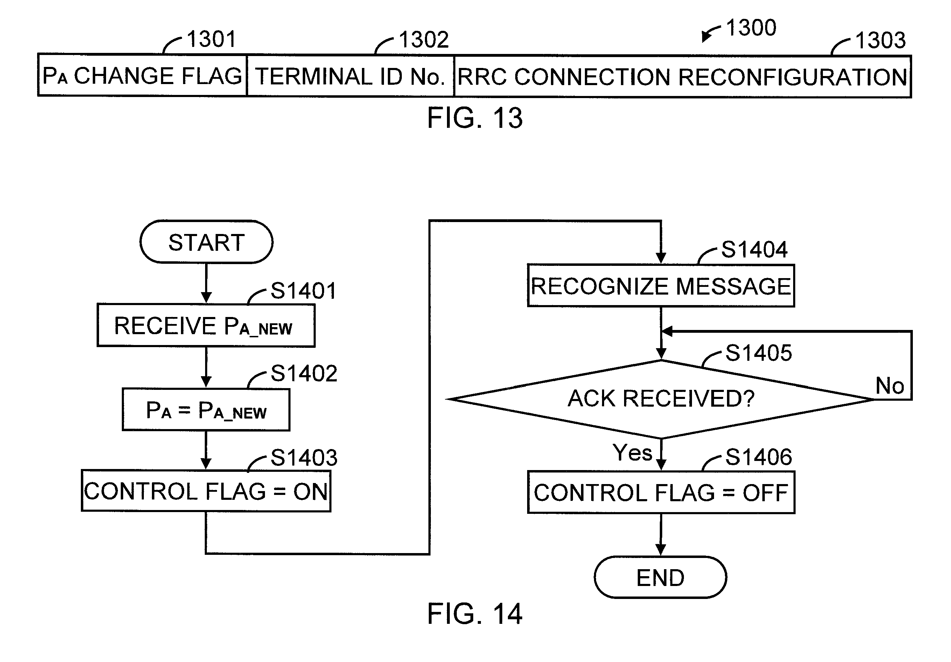

FIG. 13 illustrates an exemplary format of an RRC message notification according to the present embodiment. In operation S304, the call processing controller 102 notifies the baseband signal processor 103 by using the illustrated RRC message extension format 1300, for example. The RRC message extension format 1300 includes a P_{A} change flag 1301, a terminal identification number (ID No.) 1302 of the corresponding terminal 200, and the RRC connection reconfiguration 1303.

The call processing controller 102 validates the P_{A} change flag 1301 in advance. The baseband signal processor 103 extracts the RRC connection reconfiguration 1303 to generate a MAC PDU, and notifies the terminal 200 of the MAC PDU via the amplifier 104. Since the P_{A} change flag 1301 is valid, the baseband signal processor 103 recognizes that the MAC PDU message (MSG) generated in compliance with the RRC message extension format 1300 and transmitted to the corresponding terminal 200 is the RRC connection reconfiguration and memorizes the fact (operation S1206 in FIG. 12).

In the terminal 200, the call processing controller 203 notifies the baseband signal processor 204 of the received new power offset value P_{A_NEW} upon receiving the new power offset value P_{A_NEW} included in the RRC connection reconfiguration. The baseband signal processor 204 of the terminal 200 immediately updates the power offset value P_{A} to the new power offset value P_{A_NEW} (operation S305). The baseband signal processor 204 of the terminal 200 transmits an ACK responding to the PDSCH including the MAC PDU including the RRC connection reconfiguration to the base station apparatus 100 (operation S1207). The baseband signal processor 204 may transmit the ACK before updating the power offset value P_{A}.

In the base station apparatus 100, upon receiving from the terminal 200 the ACK responding to the PDSCH, the baseband signal processor 103 determines that the ACK is a positive response to the MAC PDU including the RRC connection reconfiguration transmitted to the corresponding terminal 200 (operation S1208).

FIG. 14 illustrates an exemplary operation flow of a baseband signal processor according to the present embodiment. Upon receiving the new power offset value P_{A_NEW} (operation S1401), the scheduler 103b of the baseband signal processor 103 immediately updates the power offset value P_{A} to the new power offset value P_{A_NEW} (operation S1402).

The scheduler 103b turns on the control flag (operation S1403) when updating the power offset value P_{A} in operation S1402. The scheduler 103b recognizes that the MAC PDU message (MSG) generated in compliance with the RRC message extension format 1300 and transmitted to the terminal 200 is RRC connection reconfiguration (operation S1404) and then monitors an ACK responding to the PDSCH including the MAC PDU ("No" in operation S1405). Upon receiving the ACK ("Yes" in operation S1405), the scheduler 103b determines that the ACK responding to the MAC PDU has been received and turns off the control flag (operation S1406). After receiving the ACK and before turning off the control flag, the scheduler 103b waits for a time for updating the power offset value P_{A} in the terminal 200. Normally, the processing speeds of the base station apparatus 100 and the terminal 200 are similar, and the time for the update is significantly short. When it is assured that the time for updating the power offset value P_{A} in the terminal 200 is shorter than that in the base station apparatus 100, the waiting time is not necessary. The operation of determining a transmission parameter for each frame is similar to that of the first embodiment (refer to FIG. 5).

According to the present embodiment, even during the time period when the power offset value P_{A} recognized by the base station apparatus 100 and the terminal 200 differs, a communication scheme (such as QPSK) which allows keeping communication is employed so that the base station apparatus 100 may keep communication to the terminal 200. The baseband signal processor 103 of the base station apparatus 100 turns off the control flag upon receiving the ACK responding to the PDSCH signal including MAC PDU including RRC connection reconfiguration transmitted by the baseband signal processor 103 of the base station apparatus 100. Thus, the base station apparatus 100 may normally perform, in accordance with the status of the terminal 200, transmission and reception according to the transmission parameter (such as 16-QAM modulation scheme which is more efficient than QPSK) determined through the scheduling, without using the timer 103e discussed in the first embodiment.

[Sixth Embodiment]

According to a sixth embodiment, the baseband signal processor 103 of the base station apparatus 100 discussed in the second embodiment does not perform the timer-counting but memorizes the fact that the RRC message has been transmitted to the terminal 200. The baseband signal processor 103 turns off the control flag in accordance with a response, received from the terminal 200, responding to the PDSCH signal response including MAC PDU including the RRC message.

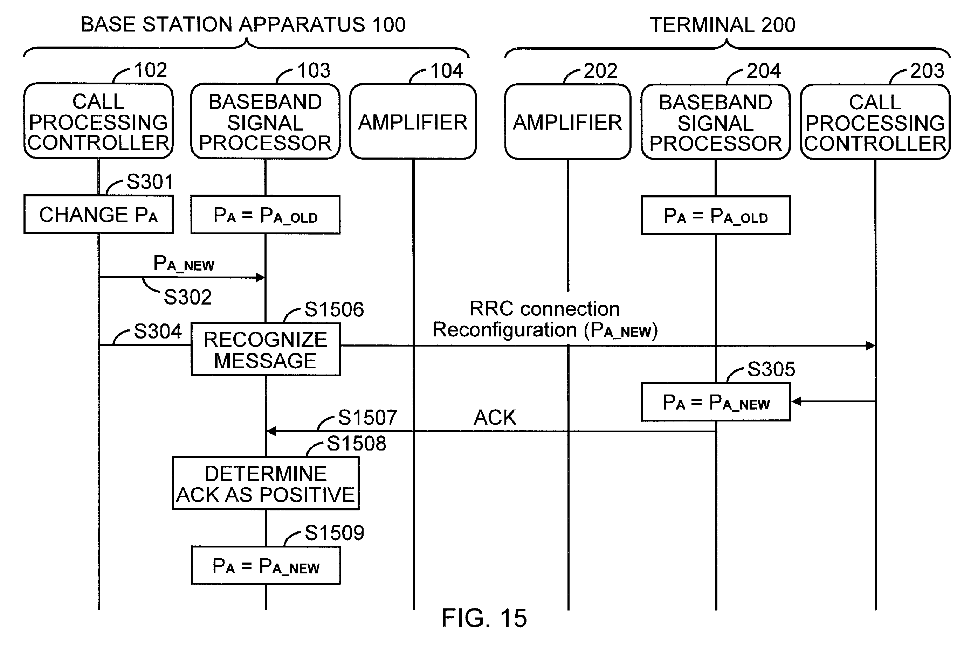

FIG. 15 illustrates an exemplary operation sequence performed by a base station apparatus and a terminal according to the present embodiment. When the call processing controller 102 of the base station apparatus 100 determines to change the power offset value P_{A} in accordance with a change in communication status to/from the terminal 200 (operation S301), the call processing controller 102 notifies the baseband signal processor 103 of a new power offset value P_{A_NEW} (operation S302). The baseband signal processor 103 does not update the power offset value P_{A} immediately when the new power offset value P_{A_NEW} is notified and keeps the control flag "ON".

The call processing controller 102 generates an RRC connection reconfiguration for changing RRC connection including the data of the new power offset value P_{A_NEW} and notifies the baseband signal processor 103 of the RRC connection reconfiguration (operation S304). Also in the present embodiment, the RRC message extension format 1300 discussed in the fifth embodiment (FIG. 13) is used.

The call processing controller 102 validates the P_{A} change flag 1301 in advance. The baseband signal processor 103 extracts the RRC connection reconfiguration 1303 to generate a MAC PDU, and notifies the terminal 200 of the MAC PDU via the amplifier 104. Since the P_{A} change flag 1301 is valid, the baseband signal processor 103 recognizes that the MAC PDU message (MSG) generated in compliance with the RRC message extension format 1300 and transmitted to the corresponding terminal 200 is the RRC connection reconfiguration and memorizes the fact (operation S1506).

In the terminal 200, the call processing controller 203 notifies the baseband signal processor 204 of the received new power offset value P_{A_NEW} upon receiving the new power offset value P_{A_NEW} included in the RRC connection reconfiguration. The baseband signal processor 204 of the terminal 200 immediately updates the power offset value P_{A} to the new power offset value P_{A_NEW} (operation S305). The baseband signal processor 204 of the terminal 200 transmits an ACK responding to the PDSCH including the MAC PDU including the RRC connection reconfiguration to the base station apparatus 100 (operation S1507). The baseband signal processor 204 may transmit the ACK before updating the power offset value P_{A}.

In the base station apparatus 100, upon receiving from the terminal 200 the ACK responding to the PDSCH, the baseband signal processor 103 determines that the ACK is a positive response to the MAC PDU including the RRC connection reconfiguration transmitted to the corresponding terminal 200 (operation S1508). The baseband signal processor 103 updates the power offset value P_{A} upon receiving the ACK (operation S1509). The baseband signal processor 103 turns off the control flag.

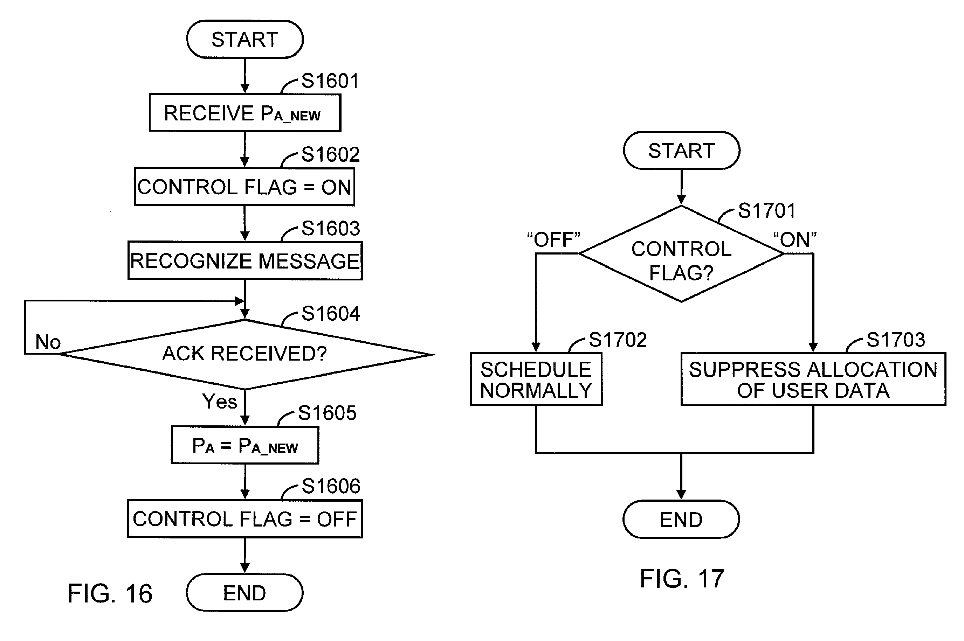

FIG. 16 illustrates an exemplary operation flow of a baseband signal processor according to the present embodiment. Upon receiving the new power offset value P_{A_NEW} (operation S1601), the scheduler 103b of the baseband signal processor 103 turns off the control flag (operation S1602). The scheduler 103b recognizes that the MAC PDU message (MSG) generated in compliance with the RRC message extension format 1300 and transmitted to the terminal 200 is RRC connection reconfiguration (operation S1603) and then monitors an ACK responding to the PDSCH including the MAC PDU ("No" in operation S1604). Upon receiving the ACK ("Yes" in operation S1604), the scheduler 103b determines that the ACK responding to the MAC PDU has been received and updates the power offset value P_{A} to a new power offset value P_{A_NEW} (operation S1605). After receiving the ACK and before turning off the control flag, the scheduler 103b waits for a time for the updating the power offset value P_{A} in the terminal 200. This is because, in this embodiment, the determination of the ACK may be earlier than the update of the power offset value P_{A} in the terminal 200. Normally, the processing speeds of the base station apparatus 100 and the terminal 200 are similar, and the time for the update is significantly short. When it is assured that the time for updating the power offset value P_{A} in the terminal 200 is shorter than that in the base station apparatus 100, the waiting time is not necessary. The scheduler 103b then turns off the control flag (operation S1606). The operation of determining a transmission parameter for each frame is similar to that of the first embodiment (refer to FIG. 5).

According to the present embodiment, even during the time period when the power offset value P_{A} recognized by the base station apparatus 100 and the terminal 200 differs, a communication scheme (such as QPSK) which allows keeping communication is employed so that the base station apparatus 100 may keep communication to the terminal 200. The baseband signal processor 103 of the base station apparatus 100 updates the power offset value P_{A} upon receiving the ACK responding to the PDSCH signal including MAC PDU including RRC connection reconfiguration transmitted by the baseband signal processor 103 of the base station apparatus 100. Thus, the base station apparatus 100 may normally perform, in accordance with the status of the terminal 200, transmission and reception according to the transmission parameter (such as 16-QAM modulation scheme which is more efficient than QPSK) determined through the scheduling, without using the timer 103e discussed in the second embodiment.

According to the present embodiment, since the power offset value P_{A} is changed after the reception of the ACK responding to the PDSCH signal including the MAC PDU including the RRC connection reconfiguration, the transmission power until the reception of the ACK may be reduced more than the fifth embodiment when the new power offset value P_{A_NEW} is higher than the old power offset value P_{A_OLD}.

Like the variation example (refer to FIG. 7B) of the second embodiment, the scheduler 103b of the baseband signal processor 103 may further compare the new power offset value P_{A_NEW} with the old power offset value P_{A_OLD} and change the timing of updating the power offset value P_{A} for the terminal 200 to the new power offset value P_{A_NEW} in accordance with the difference between the compared values. Thus, in either case where the new power offset value P_{A_NEW} is higher or lower than the old power offset value P_{A_OLD}, the transmission power during the time period from the determination to change the power offset value P_{A} to the reception of the ACK to the PDSCH including the MAC PDU including the RRC connection reconfiguration may be reduced as much as possible, and the power consumption by the apparatus may be reduced.

[Seventh Embodiment]

A seventh embodiment is a variation example of the first to sixth embodiments. More specifically, the transmission parameter determination operations in scheduling according to the first embodiment (FIG. 5) are different.

FIG. 17 illustrates an exemplary operation flow of a baseband signal processor according to the present embodiment. The scheduler 103b of the baseband signal processor 103 determines, when scheduling, whether the control flag indicates the "ON" state or the "OFF" state (operation S1701). When the control flag indicates the "OFF" state ("OFF" in operation S1701), the scheduling is performed normally (operation S1702). When the control flag indicates the "ON" state ("ON" in operation S1701), the allocation of user data for the corresponding terminal 200 is suppressed (operation S1703). The user data here may be voice data or packet data in a data channel, for example, but does not include control data in a control channel for control over the terminal 200.

According to the present embodiment, when determined, through scheduling, to perform the transmission to the terminal 200, the transmission in compliance with a modulation scheme with low efficiency such as QPSK may be avoided when the control flag indicates the "ON" state while the transmission by a modulation scheme with high efficiency such as 64-QAM may actually be allowed through normal scheduling (compared with the operations in FIG. 5 of the first embodiment). This may prevent decreases in throughput of the entire cell. According to the present embodiment, the user data is only suppressed. Thus, the exchange of control information with a terminal 200 may be performed normally.

[Eighth Embodiment]

In an eighth embodiment, the suppression of user data for a terminal 200 limited in transmission parameters discussed in the seventh embodiment will be discussed more specifically. According to the present embodiment, the baseband signal processor 103 of the base station apparatus 100 excludes user data for the corresponding terminal 200 from the scheduling targets.

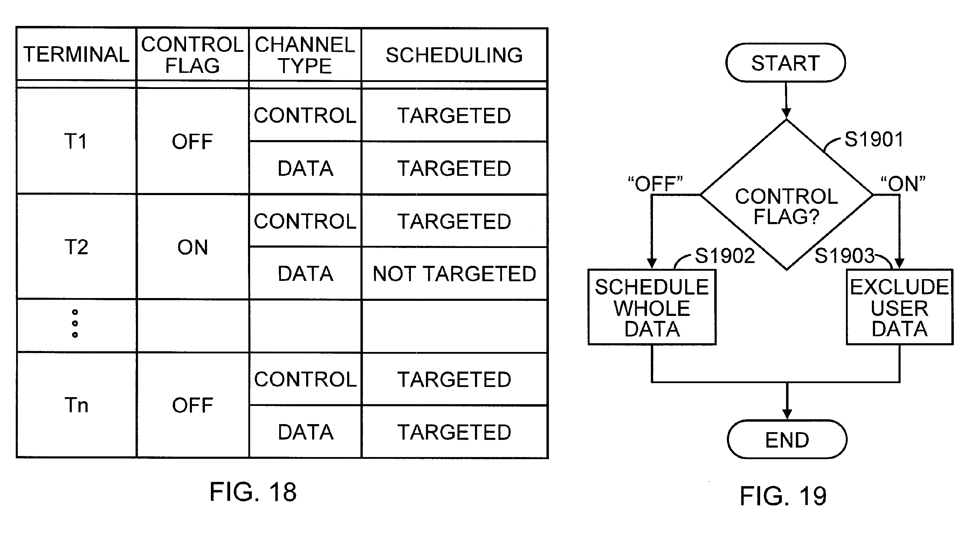

FIG. 18 illustrates an example of determination of scheduling targets in a baseband signal processor according to the present embodiment. According to the present embodiment, a data channel is set to be "not targeted" for a terminal T2 with the control flag indicating the "ON" state, as illustrated in FIG. 18. In other words, as a concrete example of suppression of user data for the terminal T2 limited in transmission parameters, the user data for the terminal T2 is excluded from scheduling targets.

FIG. 19 illustrates an exemplary operation flow of a baseband signal processor according to the present embodiment. The scheduler 103b of the baseband signal processor 103 determines, when scheduling, whether the control flag indicates the "ON" or "OFF" state (operation S1901). When the control flag indicates the "OFF" state ("OFF" in operation S1901), the scheduling is performed normally while targeting the whole data (operation S1902). When the control flag indicates the "ON" state ("ON" in operation S1901), the baseband signal processor 103 excludes the user data for the corresponding terminal 200 from the scheduling targets (operation S1903). The rest of the user data is targeted in the scheduling.

According to the present embodiment, the allocation of user data for the corresponding terminal T2 200 with the control flag indicating the "ON" state according to the seventh embodiment may be suppressed. This may prevent decreases in throughput of the entire cell.

[Ninth Embodiment]

In the eighth embodiment, the baseband signal processor 103 of the base station apparatus 100 excludes all user data for the corresponding terminal 200 are excluded from the scheduling targets. On the other hand, according to a ninth embodiment, the baseband signal processor 103 excludes a specific type of user data from the scheduling target in accordance with the type of user data.

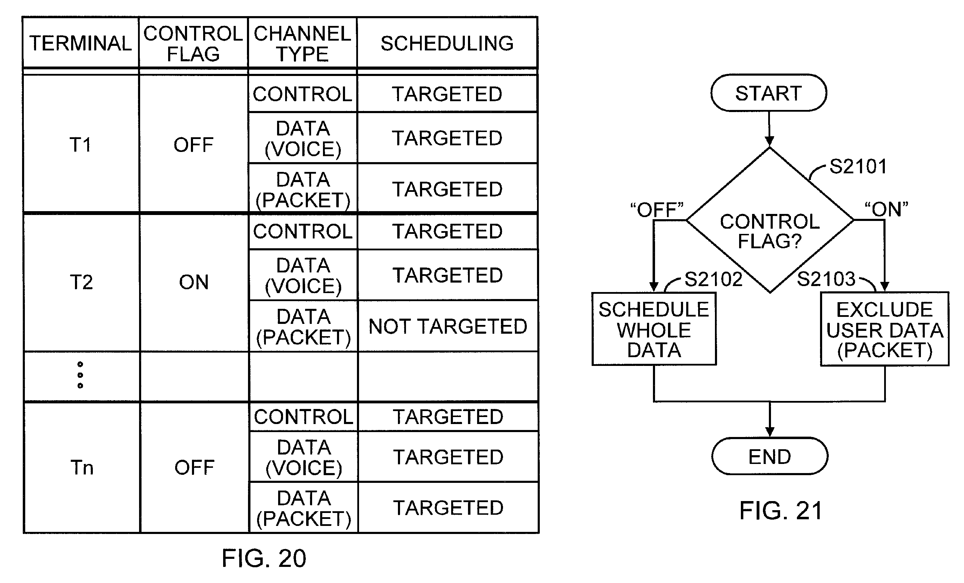

FIG. 20 illustrates an example of determination of scheduling targets in a baseband signal processor according t the present embodiment. As illustrated in FIG. 20, according to the present embodiment, the baseband signal processor 103 targets, among user data in a data channel of the terminal T2 with the control flag indicating the "ON" state, voice data which is stream data required to be transmitted at regular intervals in the scheduling, and excludes packet data which is non-stream data from the scheduling targets ("not targeted").

FIG. 21 illustrates an exemplary operation flow of a baseband signal processor according to the present embodiment. The scheduler 103b of the baseband signal processor 103 determines, when scheduling, whether the control flag indicates the "ON" or "OFF" state (operation S2101). When the control flag indicates the "OFF" state ("OFF" in operation S2101), the scheduling is performed normally while targeting the whole data (operation S2102). When the control flag indicates the "ON" state ("ON" in operation S2101), a preset type of user data ("PACKET" in the example illustrated in FIG. 20) is excluded from the scheduling targets for the corresponding terminal 200 (operation S2103). The rest of user data is targeted in the scheduling.

According to the present embodiment, since voice data which is user data required to be transmitted on a regular basis may be targeted in the scheduling, the decreases in throughput of the entire cell may be prevented and the quality of voice communication may be kept.

[Tenth Embodiment]

A tenth embodiment is another example of a method of suppressing user data in which the baseband signal processor 103 of the base station apparatus 100 checks an optimal transmission parameter before limiting transmission parameters for the corresponding terminal in accordance with the control flag in the first embodiment (refer to FIG. 5) to determine scheduling targets. In the present example, the baseband signal processor 103 checks whether the transmission parameter before a change in transmission parameter is a transmission parameter (such as QPSK modulation) allowing the terminal to keep communication even when the recognized power offset values P_{A} are mismatched and determines scheduling targets on the basis of the check result.

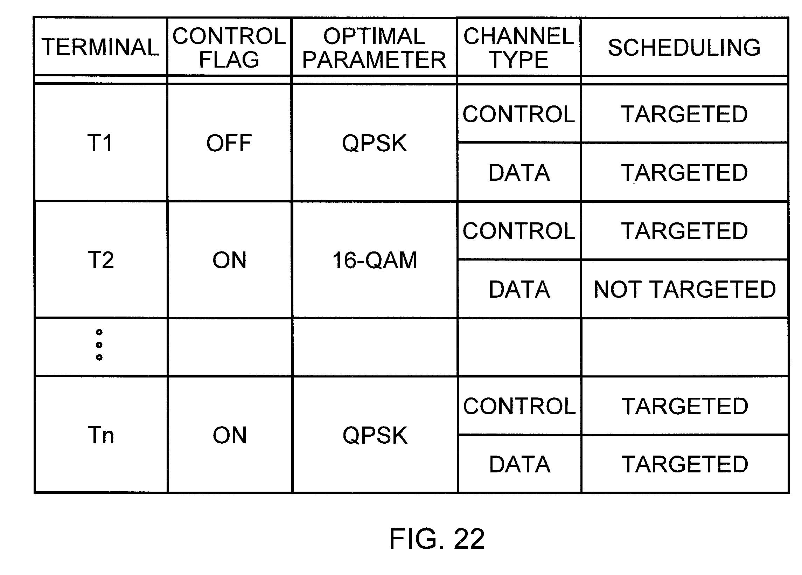

FIG. 22 illustrates an example of determination of scheduling targets in a baseband signal processor of the present embodiment. As illustrated in FIG. 22, for example, since an optimal transmission parameter before limiting transmission parameters in accordance with the control flag is QPSK modulation for a terminal Tn with a control flag indicating the "ON" state, the baseband signal processor 103 targets the user data in the data channel in the scheduling.

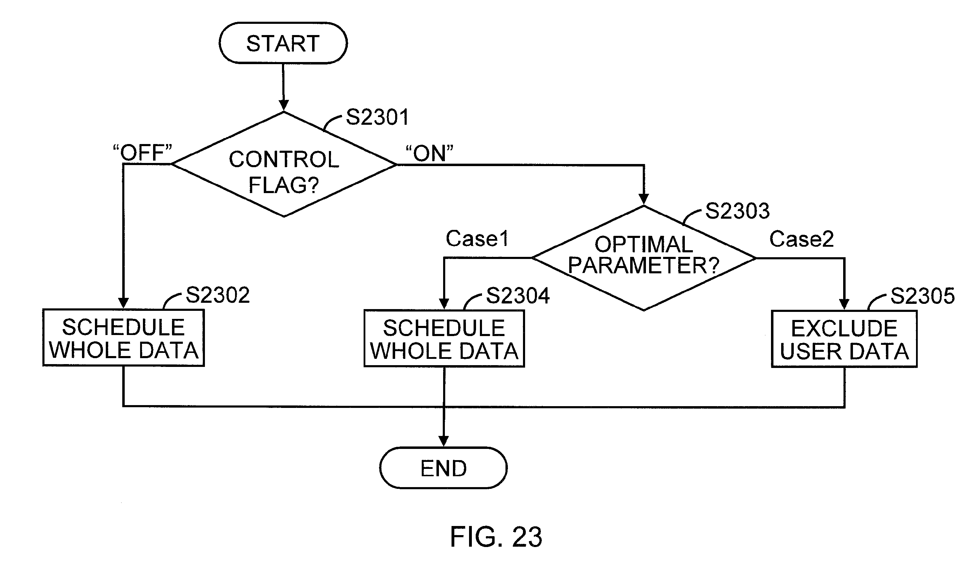

FIG. 23 illustrates an exemplary operation flow of a baseband signal processor according to the present embodiment. The scheduler 103b of the baseband signal processor 103 first determines, when scheduling, whether the control flag indicates the "ON" or "OFF" state (operation S2301). When the control flag indicates the "OFF" state ("OFF" in operation S2301), the scheduler 103b performs the scheduling normally while targeting the whole data (operation S2302).

When the control flag indicates the "ON" state ("ON" in operation S2301), the scheduler 103b checks an optimal transmission parameter before limiting transmission parameters in accordance with the control flag (operation S2303). When the optimal transmission parameter is a transmission parameter (such as QPSK modulation) allowing the terminal to keep communication even when the recognized power offset values P_{A} are mismatched ("Case1" in operation S2303), the scheduler 103b performs the scheduling normally while targeting the whole data (operation S2304). On the other hand, when the optimal transmission parameter is a transmission parameter (such as 16-QAM, 64-QAM, spatial multiplexing for a plurality of layers, and MU-MIMO) not allowing the terminal to keep communication when the recognized power offset values P_{A} are mismatched ("Case2" in operation S2303), the scheduler 103b excludes the user data for the corresponding terminal 200 from the scheduling targets ("not targeted") (operation S2305).

According to the present embodiment, the base station apparatus 100 may avoid the opportunities for coercively excluding user data for the corresponding terminal 200, even though optimally scheduled with the QPSK modulation, from the scheduling targets when the control flag indicates the "ON" state. Thus, the decreases in throughput of the entire cell may be prevented more than the eighth and ninth embodiments. In the present embodiment, the base station apparatus 100 may check the type of user data to target voice data in the scheduling, for example, like in the ninth embodiment.

[Eleventh Embodiment]

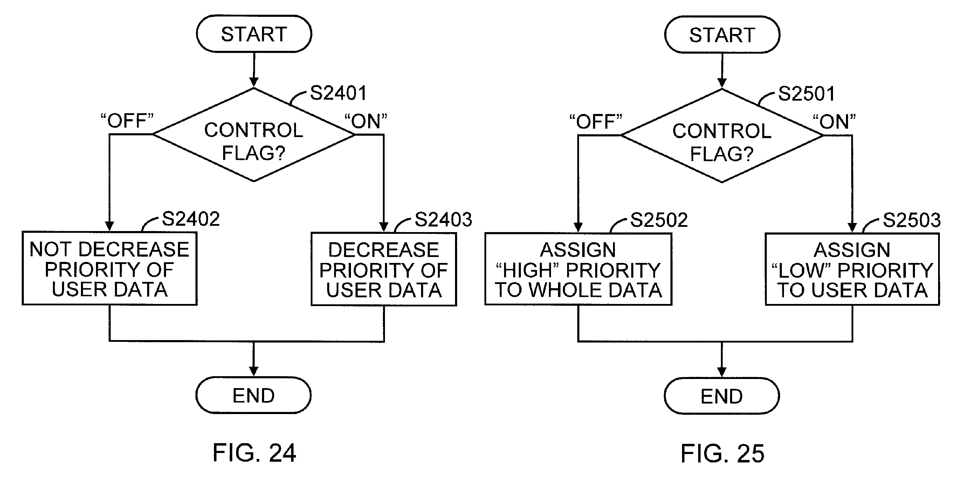

FIG. 24 illustrates an exemplary operation flow of a baseband signal processor according to an eleventh embodiment. According to the present embodiment, the baseband signal processor 103 of the base station apparatus 100 changes a priority level of user data when transmission parameter is determined in the scheduling discussed in the first embodiment (FIG. 5).

The scheduler 103b of the baseband signal processor 103 determines, when scheduling, whether the control flag indicates the "ON" or "OFF" state (operation S2401). When the control flag indicates the "OFF" state ("OFF" in operation S2401), the scheduler 103b performs scheduling while not decreasing the priority of user data for the corresponding terminal 200 (operation S2402). When the control flag indicates the "ON" state ("ON" in operation S2401), the scheduler 103b decreases the priority of user data for the corresponding terminal 200 (operation S2403). As discussed above, the user data may be voice data or packet data in a data channel.

According to the present embodiment, when one terminal is selected for one frame in the scheduling to perform a transmission by a modulation scheme such as QPSK with low efficiency while the transmission may normally be allowed by a modulation scheme such as 64-QAM with high efficiency, a terminal with higher efficiency than the selected terminal may be assigned. According to this embodiment, even when fewer users need to be scheduled, the selected terminals may be targeted in the scheduling. This may prevent decreases in throughput of the entire cell more than the seventh embodiment. Since only the user data is limited, the exchange of control information with the terminal may be performed without problems.

[Twelfth Embodiment]

According to a twelfth embodiment, in the transmission parameter determination discussed in the eleventh embodiment, the baseband signal processor 103 of the base station apparatus 100 changes graded priority level of user data. The baseband signal processor 103 decreases the graded priority level of selecting user data for the terminal 200 limited in transmission parameters.

FIG. 25 illustrates an exemplary operation flow of a baseband signal processor according to the twelfth embodiment. The scheduler 103b of the baseband signal processor 103 determines, when scheduling, whether the control flag indicates the "ON" or "OFF" state (operation S2501). When the control flag indicates the "OFF" state ("OFF" in operation S2501), the scheduler 103b assigns a scheduling priority level "high" to the whole data (operation S2502). On the other hand, when the control flag indicates the "ON" state ("ON" in operation S2501), the scheduler 103b assigns a scheduling priority level "low" to user data for the corresponding terminal 200 (operation S2503). In this case, the scheduler 103b assigns the scheduling priority level "high" to the rest of data.

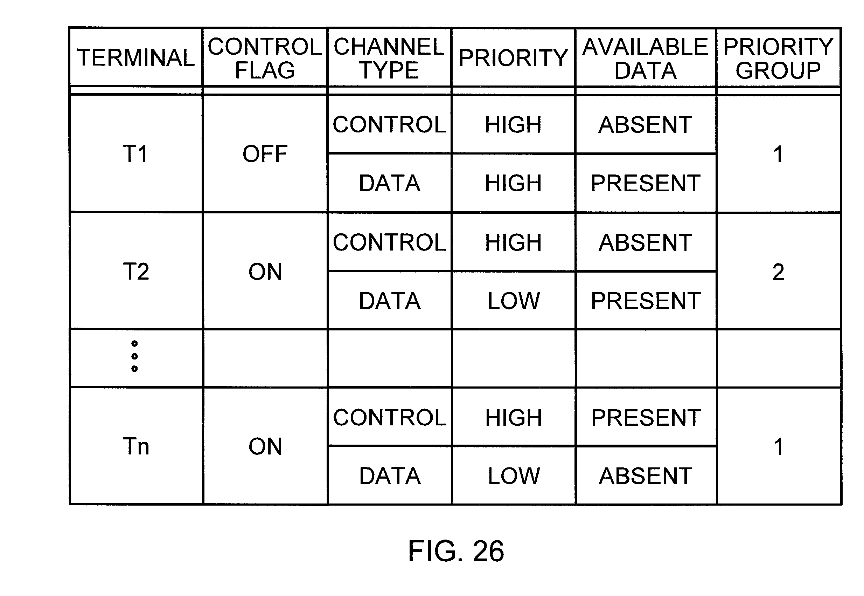

FIG. 26 is a table illustrating an example of assigning scheduling priority levels according to the present embodiment. In the example illustrated in FIG. 26, the scheduling priority level of the data channel (user data) is changed from "high" to "low" for the terminals T2 and Tn with a control flag indicating the "ON" state. This table has the setting for the presence of available data for transmission and the setting of a priority group. The priority group is set in accordance with the presence of available data for transmission, and the scheduling is performed for terminals in order from one with a priority group "1".

In determining which terminal 200 (user) is to be selected for each frame, the scheduler 103b gives priority to a terminal having data with the scheduling priority level "high" for targeting in the scheduling and then targets a terminal 200 having data with the scheduling priority level "low" in the scheduling. As illustrated in FIG. 26, the scheduling priority level "low" is given to both of the data channels of the terminals 2 and n with the control flag indicating the "ON" state. However, the terminal Tn having the control channel with "PRESENT" available data is given a higher priority level than the terminal T2 having the control channel with "ABSENT" available data and has the priority group "1".

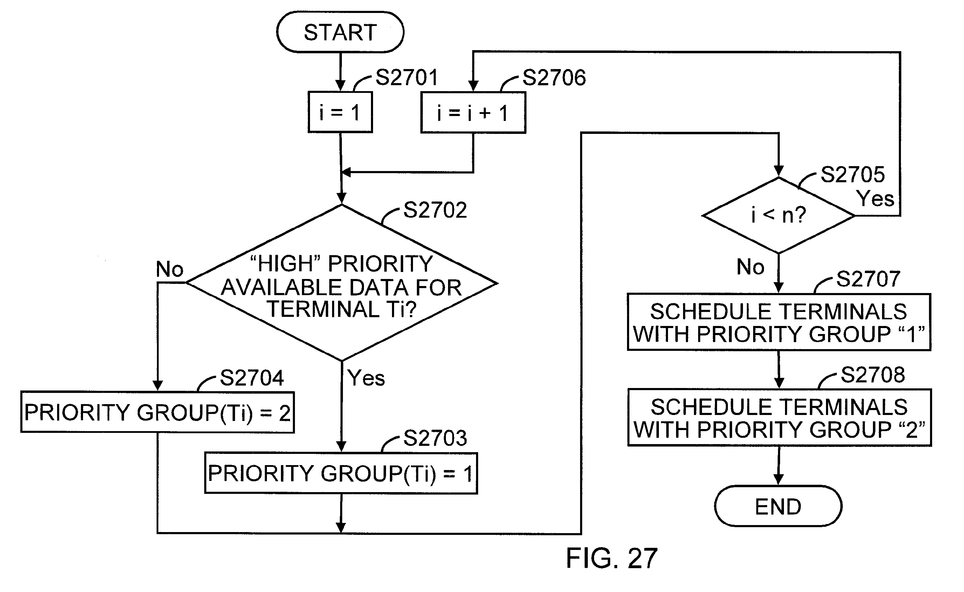

FIG. 27 is a diagram illustrating an exemplary operation flow of user selection based on scheduling priority level according to the present embodiment. First of all, the scheduler 103b sets an initial value "1" to a terminal number i (operation S2701). It is assumed that the scheduling is performed in order from the terminal with the priority group "1". The scheduler 103b determines whether available data for a terminal Ti has the scheduling priority level "high" (operation S2702). When the available data has the scheduling priority level "high" ("Yes" in operation S2702), the scheduler 103b sets the priority group for the terminal Ti to the highest priority "1" (operation S2703). When the available data does not have the scheduling priority level "high" ("No" in operation S2702) on the other hand, the scheduler 103b sets the priority group for the terminal Ti to the second priority "2" (operation S2704).

The scheduler 103b determines whether i is less than the number n of scheduling target terminals (operation S2705). When i is less than n ("Yes" in operation S2705), the scheduler 103b increments i (operation S2706) and advances the process to operation S2702 to perform priority group assigning.

When i reaches n ("No" in operation S2705), the scheduler 103b first schedules terminals 200 with the priority group "1" (terminals T1 and Tn in the example in FIG. 26) (operation S2707). No more terminals 200 with the priority group "1" which may be scheduled are left, the scheduler 103b performs the scheduling for terminals 200 with the next priority group "2" (the terminal T2 in the example in FIG. 26) (operation S2708).

In the above discussed eighth to tenth embodiments, excluding user data may possibly prevent the transmission of user data because the user data may be excluded from the targets even when the number of user data is low. The problem may be avoided according to the present embodiment because the base station apparatus 100 assigns a scheduling priority level to the user data for a terminal 200 with a control flag indicating the "ON" state as discussed in the eleventh embodiment in accordance with the presence of available data for the terminal 200. In other words, the base station apparatus 100 schedules terminals in order of priority based on data to be transmitted to a plurality of terminals 200, preventing the decreases in throughput of the entire cell.

[Thirteenth Embodiment]

The baseband signal processor 103 of the base station apparatus 100 assigns the scheduling priority level "low" to whole user data for terminals 200 in the twelfth embodiment. According to a thirteenth embodiment, the baseband signal processor 103 differentiates the scheduling priority levels in accordance with the types of user data. For example, the scheduling priority level "low" may be assigned to packet data among the user data, and the scheduling priority level "high" may be assigned to voice data among the user data.

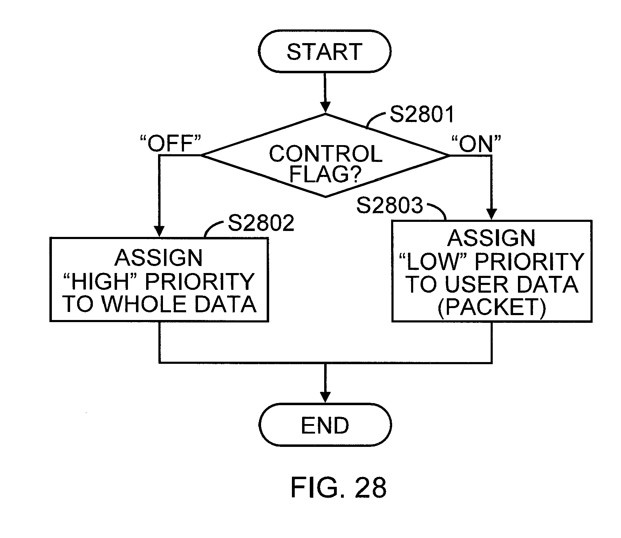

FIG. 28 illustrates an exemplary operation flow of a baseband signal processor according to the present embodiment. The scheduler 103b of the baseband signal processor 103 determines, when scheduling, whether the control flag indicates the "ON" or "OFF" state (operation S2801). When the control flag indicates the "OFF" state ("OFF" in operation S2801), the scheduler 103b assigns the scheduling priority level "high" to the whole data (operation S2802). On the other hand, when the control flag indicates the "ON" state ("ON" in operation S2801), the scheduler 103b assigns the scheduling priority level "low" to user data, whose type is packet data, for the corresponding terminal 200 (operation S2803). The scheduler 103b assigns the scheduling priority level "high" to the rest of data. The operation flow of user selection according to the scheduling priority level according to the thirteenth embodiment is similar to that of the twelfth embodiment (FIG. 27).

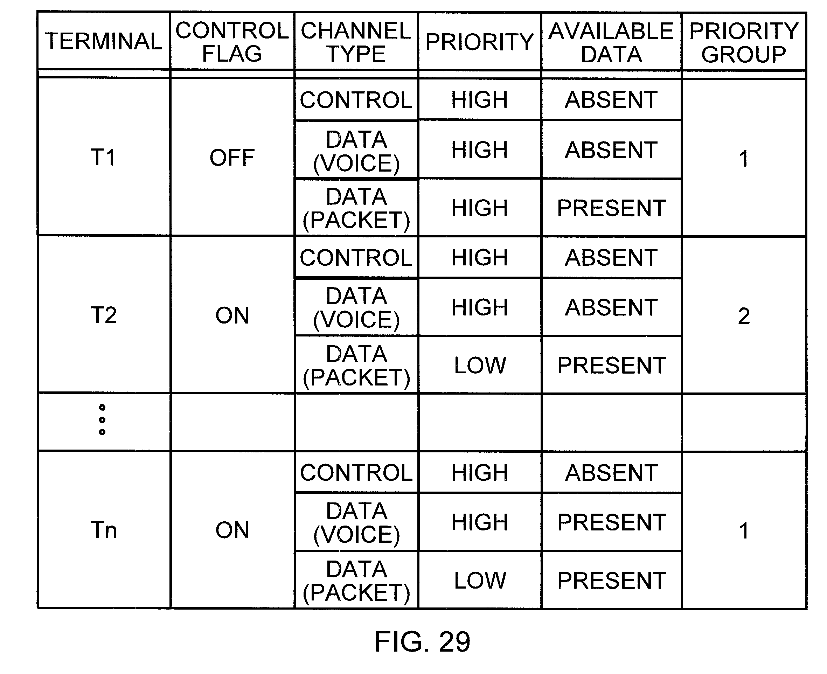

FIG. 29 is a table illustrating an example of assigning scheduling priority levels for terminals 200 according to the present embodiment. In determining which terminal 200 is to be selected for each frame, the scheduler 103b gives priority to a terminal 200 having available data with the scheduling priority level "high" to target it in the scheduling and then targets a terminal 200 with the priority level "low" in the scheduling. In the example illustrated in FIG. 29, a terminal T1 with a control flag indicating the "OFF" state has the setting of a priority group "1", and a terminal with a control flag indicating the "ON" state is to be selected next. Among the terminals with a control flag indicating the "ON" state, terminals 2 and n with the scheduling priority level "high" having available data are given priority to be scheduling targets. Here, since the terminal Tn has available data in both of voice data and packet data, a priority group "1" is given. Since the terminal T2 has available data only in packet data, a priority group "2" which is a lower priority level is given.

According to the present embodiment, the type of user data required to be transmitted at regular intervals is determined, and voice data, for example, may be given a higher scheduling priority level. This may prevent the decreases in throughput of entire cell, and the quality of voice communication may be kept.

[Fourteenth Embodiment]

According to the fourteenth embodiment, in addition to the processing of the twelfth embodiment, the baseband signal processor 103 of the base station apparatus 100 checks the transmission parameter before limiting the transmission parameters for terminal 200 in accordance with the control flag and determines the scheduling priority level. The baseband signal processor 103 according to the present embodiment assigns the scheduling priority level to user data for the corresponding terminals 200 on the basis of the transmission parameter before limiting the transmission parameters for terminals 200 in accordance with control flags.

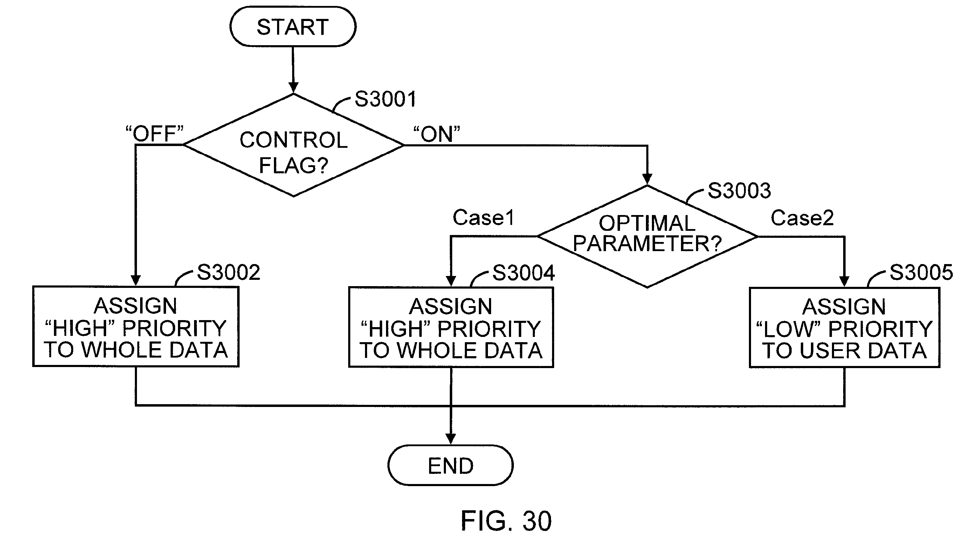

FIG. 30 illustrates an exemplary operation flow of a baseband signal processor according to the present embodiment. The scheduler 103b of the baseband signal processor 103 determines, when scheduling, whether the control flag indicates the "ON" or "OFF" state (operation S3001). When the control flag indicates the "OFF" state ("OFF" in operation S3001), the scheduler 103b assigns the scheduling priority level "high" to the whole data (operation S3002). When the control flag indicates the "ON" state ("ON" in operation S3001), the scheduler 103b checks an optimal transmission parameter before limiting transmission parameters in accordance with the control flag (operation S3003).

When the optimal transmission parameter is a transmission parameter (such as QPSK modulation) allowing the terminal to keep communication even when the recognized power offset values P_{A} are mismatched ("Case1" in operation S3003), scheduler 103b assigns the scheduling priority level "high" to the whole data (operation S3004). On the other hand, when the optimal transmission parameter is a transmission parameter (such as 16-QAM, 64-QAM, spatial multiplexing for a plurality of layers, and MU-MIMO) not allowing the terminal to keep communication when the recognized power offset values P_{A} are mismatched ("Case2" in operation S3003), the scheduler 103b assigns the scheduling priority level "low" to user data for the corresponding terminals 200 (operation S3005). The scheduler 103b assigns the scheduling priority level "high" to the rest of data. Like the thirteenth embodiment, voice data may be given the scheduling priority level "high".

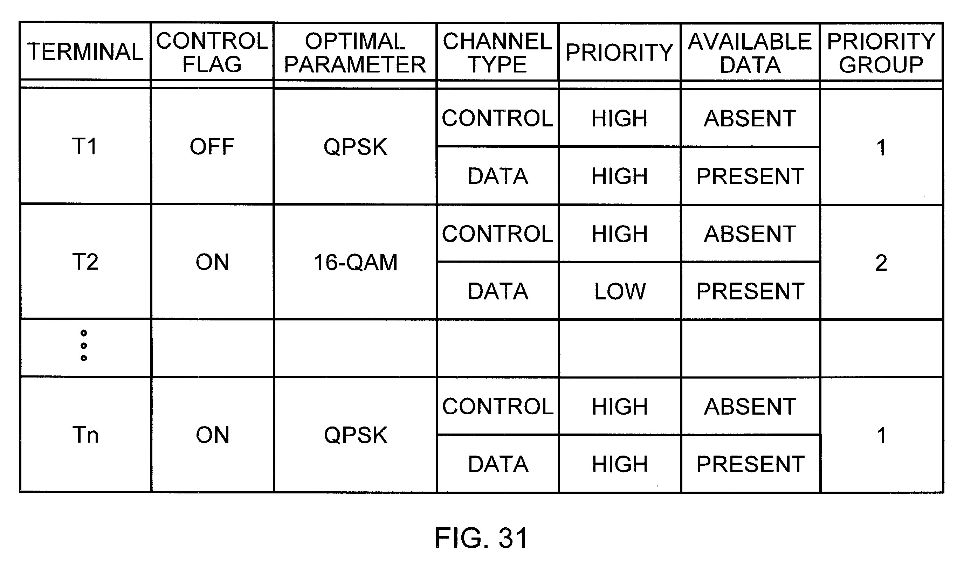

FIG. 31 is a table illustrating an example of assigning scheduling priority levels according to the present embodiment. In determining which terminal 200 is to be selected for each frame, the scheduler 103b gives priority to a terminal 200 having data with the scheduling priority level "high" to target it in the scheduling and then targets a terminal 200 with the scheduling priority level "low" in the scheduling. In the example illustrated in FIG. 31, since the optimal transmission parameter for the terminal Tn with the control flag indicating the "ON" state is QPSK modulation, the scheduling priority of the data channel (user data) is kept "high". On the other hand, since the optimal transmission parameter for the terminal T2 with a control flag indicating the "ON" state is one other than QPSK modulation, the scheduling priority level of the data channel (user data) is changed from "high" to "low". The scheduling is performed for terminals in order from one with a priority group "1". The operation flow of user selection according to the scheduling priority level is similar to that of the twelfth embodiment (refer to FIG. 27).

According to the present embodiment, optimal scheduling may be performed without coercively excluding a terminal which is normally to be scheduled. This may prevent decreases in throughput of the entire cell more than the twelfth and thirteenth embodiments.

[Fifteenth Embodiment]

According to a fifteenth embodiment, the baseband signal processor 103 of the base station apparatus 100 performs scheduling by using weighting factors for scheduling instead of the scheduling priority discussed in the eleventh to fourteenth embodiments. The baseband signal processor 103 performs weighting on the basis of several parameters, and selects a terminal 200 (user) for each frame in accordance with a weighting factor (terminal weighting factor) for a terminal which is acquired by multiplying the weighting factors for the several parameters. According to the present embodiment, the baseband signal processor 103 performs weighting in accordance with the "ON" or "OFF" state of the control flag.

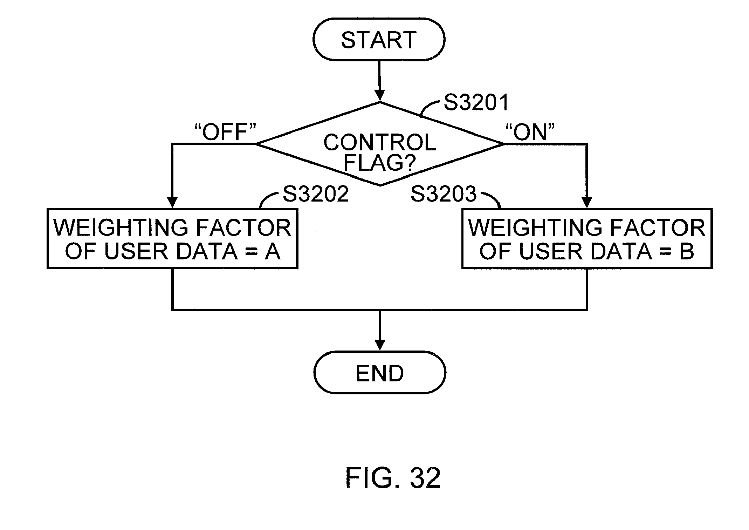

FIG. 32 illustrates an exemplary operation flow of a baseband signal processor according to the present embodiment. The scheduler 103b of the baseband signal processor 103 determines, when scheduling, whether the control flag indicates the "ON" or "OFF" state (operation S3201). When the control flag indicates the "OFF" state ("OFF" in operation S3201), the scheduler 103b assigns a weighting factor A to user data for the corresponding terminal 200 (operation S3202). When the control flag indicates the "ON" state ("ON" in operation S3201) on the other hand, the scheduler 103b assigns a weighting factor B to user data for the corresponding terminal 200 (operation S3203). In this case, the scheduler 103b assigns a weighting factor A to the rest of data. If a high priority level is given when the weighting factor is high, the values of the weighting factors have a relationship of A > B for decreasing the priority level for the terminal with a control flag indicating the "ON" state.

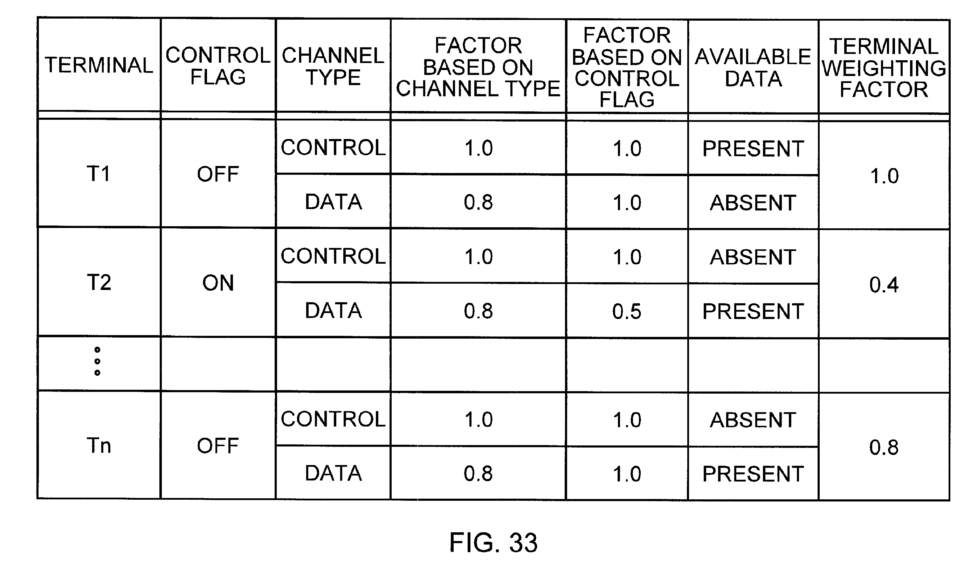

FIG. 33 illustrates an example of assigning weighting factors for scheduling according to the present embodiment. In the example illustrated in FIG. 33, the weighting factors according to the channel types are 1.0 and 0.8 of a control channel and a data channel, respectively, so that the weighting factor value of a data channel is lower. However, the weighting factors are not limited thereto. The weighting factors according to the control flags are 0.5 and 1.0 for the "ON" state and the "OFF" state, respectively.

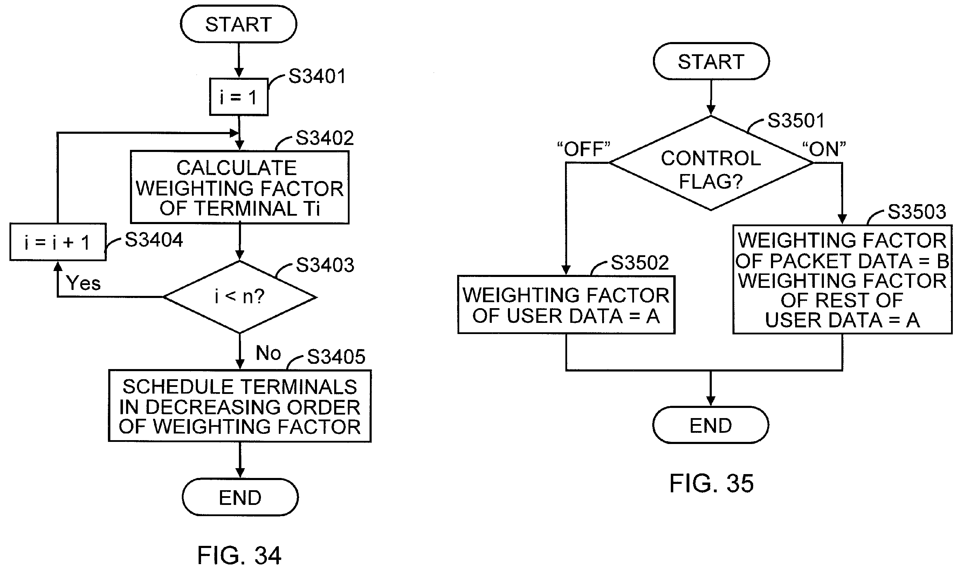

FIG. 34 is a diagram illustrating an exemplary operation flow of user selection based on weighting factors according to the present embodiment. First of all, the scheduler 103b sets an initial value "1" to a terminal number i (operation S3401). the scheduler 103b calculates the weighting factor of the terminal Ti (operation S3402). The scheduler 103b calculates terminal weighting factors for a channel having available data and defines the maximum value as the terminal weighting factor. The terminal weighting factor may be acquired by multiplying a weighting factor according to the channel type by a weighting factor according to the control flag, for example. In the example illustrated in FIG. 33, as for the control channel of the terminal T1, the weighting factor according to the channel type is 1.0, and the weighting factor according to the control flag indicating the "OFF" state is 1.0. Therefore, the weighting factor of the terminal is 1.0 × 1.0 = 1.0. As for the control channel of the terminal T2, the weighting factor according to the channel type is 0.8, and the weighting factor according to the control flag indicating the "ON" state is 0.5. Therefore, the weighting factor of the terminal is 0.8 x 0.5 = 0.4.

Next, the scheduler 103b determines whether i is less than the number n of scheduling target terminals (operation S3403). When i is less than n ("Yes" in operation S3403), the scheduler 103b increments i to specify the next terminal (operation S3404). Then, the scheduler 103b advances the process to operation S3402. When i reaches n ("No" in operation S3403), the scheduler 103b performs scheduling in order from a terminal having the highest weighting factor value (operation S3405). In the example illustrated in FIG. 33, scheduling is performed in order of the terminals T1, Tn, and T2 from the terminal with the highest weighting factor.

According to the fifteenth embodiment, while the scheduler 103b applies the combination of the weighting factor according to the control flag and the weighting factor according to the channel type, other parameters may be combined. The scheduler 103b may combine a plurality of parameters. For example, the scheduler 103b may use both of the weighting factors and the priority level discussed in the eleventh to fourteenth embodiments.

According to the fifteenth embodiment, since the weighting factor is calculated in accordance with the type of channel data and the presence of available data, the resulting weighting factor may be applied efficiently for actual communication operations. Since the priority levels of user data for terminals with control flag indicating the "ON" state discussed in the eleventh embodiment may be changed in more detail (may be decreased), the decreases in throughput of the entire cell may be prevented.

[Sixteenth Embodiment]

The baseband signal processor 103 of the base station apparatus 100 assigns uniform weighting factors to whole user data for terminals 200 in the fifteenth embodiment. According to the sixteenth embodiment, the baseband signal processor 103 assigns different weighting factors in accordance with the type of user data.

FIG. 35 illustrates an exemplary operation flow of a baseband signal processor of the present embodiment. The scheduler 103b of the baseband signal processor 103 determines, when scheduling, whether the control flag indicates the "ON" or "OFF" state (operation S3501). When the control flag indicates the "OFF" state ("OFF" in operation S3501), the scheduler 103b assigns a weighting factor A to user data for the corresponding terminal 200 (operation S3502). When the control flag indicates the "ON" state ("ON" in operation S3501) on the other hand, the scheduler 103b assigns a weighting factor B to packet data among user data for the corresponding terminal 200. The scheduler 103b assigns a weighting factor A to the rest (such as voice data) of user data (operation S3503). If a high priority level is given when the weighting factor is high, the values of the weighting factors have a relationship of A > B for decreasing the priority level for the terminal with a control flag indicating the "ON" state.

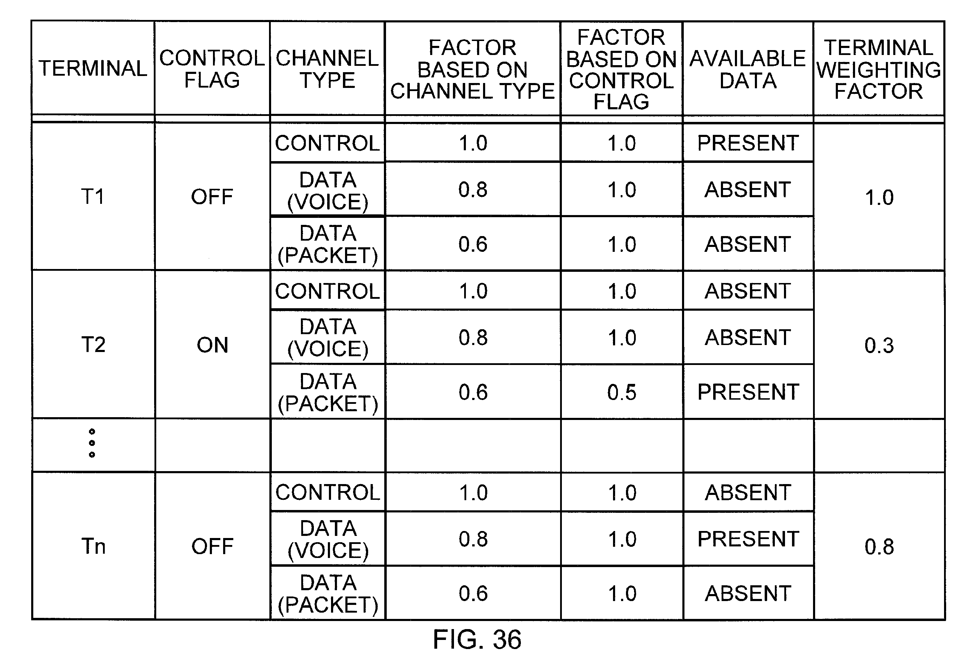

FIG. 36 illustrates an example of assigning weighting factors for scheduling according to the present embodiment. In the example illustrated in FIG. 36, the weighting factors according to the channel types are 1.0, 0.8, and 0.6 for a control channel, a voice data channel, and a packet data channel, respectively, so that the value of the weighting factor for a data channel is lower. However, the weighting factors are not limited thereto. The weighting factor according to the control flags are 0.5 for the "ON" state of packet data and 1.0 for the rest.

The operation flow of user selection based on weighting factors according to the sixteenth embodiment is similar to that of the fifteenth embodiment (FIG. 34). The terminal weighting factor may be acquired by multiplying a weighting factor according to the channel type, which is different between voice data and packet data, by a weighting factor according to the control flag, for example. In the example illustrated in FIG. 36, for the terminal T2, the weighting factor according to the packet data channel is 0.6, and the weighting factor according to the control flag indicating the "ON" state for the packet data channel is 0.5. Therefore, the weighting factor of the terminal T2 is 0.6 x 0.5 = 0.3. In the example illustrated in FIG. 36, scheduling is performed in order of the terminals T1, Tn, and T2 from the terminal with the highest weighting factor. Also according to the present embodiment, the base station apparatus 100 applies the combination of the weighting factor according to the control flag and the weighting factor according to the channel type, other parameters such as a priority level may be combined.

According to the present embodiment, since user data (voice data) required to be transmitted at regular intervals may be given a higher weighting factor, the decreases in throughput of the entire cell may be reduced, and the quality of voice communication may be kept.

[Seventeenth Embodiment]

According to a seventeenth embodiment, the baseband signal processor 103 of the base station apparatus 100, when changing weighting for scheduling discussed in the fifteenth embodiment, checks the transmission parameter before limiting the transmission parameters for a terminal 200 in accordance with the control flag to perform the scheduling. The baseband signal processor 103 according to the present embodiment assigns the weighting factor to user data for the corresponding terminal 200 on the basis of the transmission parameter before limiting the transmission parameters for terminals 200 in accordance with the control flags.

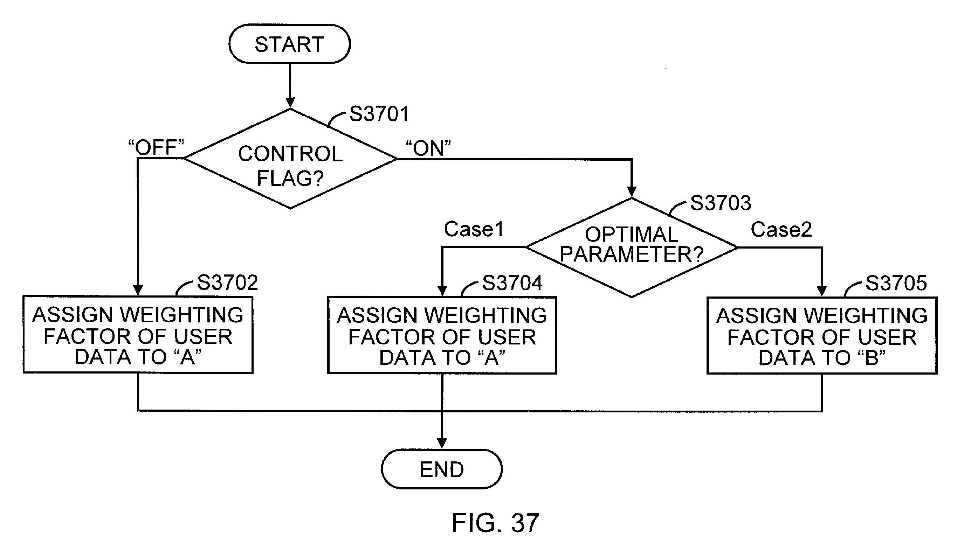

FIG. 37 illustrates an exemplary operation flow of a baseband signal processor according to the present embodiment. The scheduler 103b of the baseband signal processor 103 determines, when scheduling, whether the control flag indicates the "ON" or "OFF" state (operation S3701). When the control flag indicates the "OFF" state ("OFF" in operation S3701), the scheduler 103b assigns the weighting factor A to user data for the corresponding terminal 200 (operation S3702). When the control flag indicates the "ON" state ("ON" in operation S3701), the scheduler 103b checks an optimal transmission parameter before limiting transmission parameters in accordance with the control flag (operation S3703).

When the optimal transmission parameter is a transmission parameter (such as QPSK modulation) allowing the terminal to keep communication even when the recognized power offset values P_{A} are mismatched ("Case1" in operation S3703), scheduler 103b assigns the weighting factor A to user data for the corresponding terminal 200 (operation S3704). On the other hand, when the optimal transmission parameter is a transmission parameter (such as 16-QAM, 64-QAM, spatial multiplexing for a plurality of layers, and MU-MIMO) not allowing the terminal to keep communication when the recognized power offset values P_{A} are mismatched ("Case2" in operation S3703), the scheduler 103b assigns a weighting factor B to user data for the corresponding terminals 200 (operation S3705). If a high priority level is given when the weighting factor is high, the values of the weighting factors have a relationship of A > B for decreasing the priority level for the terminal with a control flag indicating the "ON" state.

For example, when the optimal transmission parameter before limiting transmission parameters in accordance with the control flag is QPSK modulation ("Case1" in operation S3703), the scheduler 103b assigns the weighting factor A. When the optimal transmission parameter is 16-QAM, 64-QAM, spatial multiplexing for a plurality of layers, or MU-MIMO ("Case2" in operation S3703), the scheduler 103b assigns the weighting factor B. Here, the values of the weighting factors have a relationship of A > B. Like the sixteenth embodiment, the scheduler 103b may assign a higher value of the weighting factor for voice data.

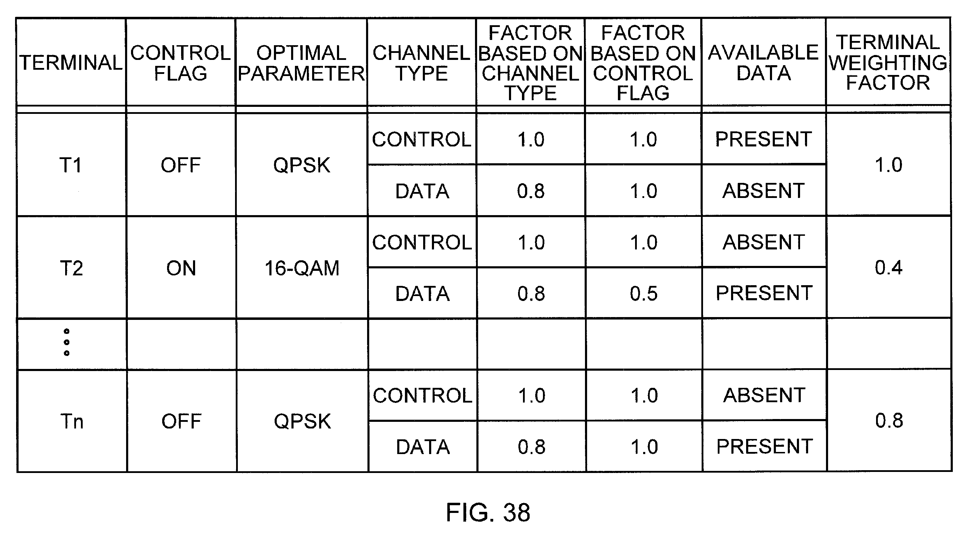

FIG. 38 illustrates an example of assigning weighting factors for scheduling according to the present embodiment. In the example illustrated in FIG. 38, since the optimal transmission parameter for the terminal T1 with a control flag indicating the "OFF" state is QPSK modulation, the weighting factor according to the control flag for the data channel (user data) is 1.0. On the other hand, since the optimal transmission parameter for the terminal T2 with a control flag indicating the "ON" state is one other than QPSK modulation, the weighting factor according to the control flag for the data channel (user data) is changed to 0.5.

The operation flow of user selection based on weighting factors according to the seventeenth embodiment is also similar to that of the fifteenth embodiment (FIG. 34). In the example illustrated in FIG. 38, the scheduling is performed in order of the terminals T1, Tn, and T2 from the terminal with the highest weighting factor. According to the present embodiment, the base station apparatus 100 applies the combination of the weighting factor according to the control flag and the weighting factor according to the channel type, other parameters such as a priority level may be combined. The base station apparatus 100 may combine a plurality of parameters.

According to the present embodiment, the base station apparatus 100 checks the transmission parameter before limiting transmission parameters for the terminal 200 in accordance with the control flag to perform scheduling. Thus, the base station apparatus 100 may reduce the opportunities for coercively decreasing the priority level of the terminal 200 optimally scheduled with QPSK modulation as the optimal transmission parameter before limiting transmission parameters. Thus, the decreases in throughput of the entire cell may be prevented more than the fifteenth and sixteenth embodiments.

The base station apparatus 100 may define (or calculate) the priority level and the value of weighting factor for a user (terminal 200) in the scheduling on the basis of the required quality for each type of user data and may change the calculation details in accordance with a change in the required quality if any. This may prevent decreases in throughput of the entire cell, keep the quality of a specific type of user data, and maintain the quality of communication services.

As discussed above, according to the embodiments of the base station apparatus and communication method, even when a power offset value P_{A} is changed during communication, the base station apparatus 100 changes the communication parameter to perform optimal scheduling for keeping communication with the terminal. Thus, the throughput of the entire cell may be improved.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been discussed in detail, it should be understood that the various changes, substitutions, and alterations could be made hereto without departing from the spirit and scope of the invention.
In any of the above aspects, the various features may be implemented in hardware, or as software modules running on one or more processors. Features of one aspect may be applied to any of the other aspects.
The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.
The present disclosure extends to a computer program which, when executed on a base station apparatus, causes the base station apparatus to carry out the communication method of claim 15.

## Claims

1. A base station apparatus performing a shared channel communication with a plurality of terminals, the base station apparatus comprising:
a signal processor configured to employ, when the base station apparatus changes a value of a parameter from an old value to a new value, a communication or modulation scheme in a communication with one terminal of the plurality of terminals, the parameter being for determining transmission power for the communication with the one terminal, the communication or modulation scheme allowing the communication with the one terminal to be kept while at least a time period from a time when the base station apparatus transmits the new value until a time when the one terminal receives and recognizes the new value.

2. The base station apparatus according to claim 1, wherein
the parameter represents a power offset value for performing power control of respective terminals.

3. The base station apparatus according to claim 1 or 2, wherein
the signal processor changes the value of the parameter at a start of the time period.

4. The base station apparatus according to any of claims 1 to 3, wherein
the signal processor changes the value of the parameter at an end of the time period.

5. The base station apparatus according to any of claims 1 to 4, wherein the signal processor
compares the new value to the old value, and
chooses, between a start and an end of the time period, a timing of changing the value of the parameter according to whether the value of the parameter increases or decreases.

6. The base station apparatus according to any of claims 1 to 5, wherein the signal processor
includes a timer for timing the time period, and
determines that the one terminal recognizes the new value when the time period expires.

7. The base station apparatus according to any of claims 1 to 6, wherein
the signal processor transmits a control message including the new value to the one terminal.

8. The base station apparatus according to claim 7, wherein
the signal processor determines, upon receiving a response message, that the one terminal recognizes the new value, the response message being transmitted from the one terminal after the one terminal recognizes the new value by receiving the control message.

9. The base station apparatus according to claim 7 or 8, wherein the signal processor
transmits a signal as the control message to the one terminal, the signal including a message for call control in the one terminal, and
determines, upon receiving an acknowledgement responding to the signal, that the one terminal recognizes the new value.

10. The base station apparatus according to any of claims 1 to 9, wherein
the signal processor suppresses allocation of user data for the one terminal during the time period.

11. The base station apparatus according to claim 10, wherein
the signal processor excludes the user data for the one terminal from scheduling during the time period.

12. The base station apparatus according to claim 11, wherein
the signal processor excludes non-streaming data among the user data from the scheduling.

13. The base station apparatus according to any of claims 10 to 12, wherein
the signal processor
checks a previous communication or modulation scheme employed before the time period,
does not exclude the user data for the one terminal from the scheduling when the previous communication or modulation scheme allows the communication with the one terminal to be kept, and
excludes the user data for the one terminal from scheduling when the previous communication or modulation scheme does not allow the communication with the one terminal to be kept.

14. The base station apparatus according to any of claims 10 to 13, wherein
the signal processor gives to the user data for the one terminal during the time period a scheduling priority level lower than a scheduling priority level of rest of user data.

15. A communication method executed by a base station apparatus performing a shared channel communication with a plurality of terminals, the communication method comprising:
determining to change a value of a parameter to a new value, the parameter being for determining transmission power for a communication with one terminal of the plurality of terminals; and
employing, by the base station apparatus, a communication or modulation scheme in the communication with the one terminal, the communication or modulation scheme allowing the communication with the one terminal to be kept while at least a time period from a time when the base station apparatus transmits the new value until a time when the one terminal receives and recognizes the new value.
